(19) Europäisches Patentamt
European Patent Office
Office européen des brevets

(11) **EP 4 656 373 A1**

(12) **EUROPEAN PATENT APPLICATION**
published in accordance with Art. 153(4) EPC

(43) Date of publication:
**03.12.2025 Bulletin 2025/49**

(51) International Patent Classification (IPC):
**B32B 3/30** (2006.01)   **B32B 7/023** (2019.01)
**B32B 27/00** (2006.01)   **B32B 27/16** (2006.01)

(21) Application number: **23918628.1**

(52) Cooperative Patent Classification (CPC):
**B32B 3/30; B32B 7/023; B32B 27/00; B32B 27/16**

(22) Date of filing: **20.12.2023**

(86) International application number:
**PCT/JP2023/045696**

(87) International publication number:
**WO 2024/157674 (02.08.2024 Gazette 2024/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.01.2023  JP 2023009515
09.11.2023  JP 2023191666**

(71) Applicant: **Toppan Holdings Inc.
Tokyo 110-0016 (JP)**

(72) Inventors:
• AOKI, Eishi
  Tokyo 110-0016 (JP)
• NISHIKAWA, Yohei
  Tokyo 110-0016 (JP)
• HATTORI, Masashi
  Tokyo 110-0016 (JP)

(74) Representative: **TBK
Bavariaring 4-6
80336 München (DE)**

(54) **DECORATIVE SHEET**

(57) The disclosure provides a decorative sheet 1 including a primary film layer 2 and a surface protective layer 5 provided to one side of the primary film layer 2, wherein the surface protective layer 5 has a surface provided with an uneven structure including a plurality of ridge portions each protruding in a ridge-like shape; in the uneven structure of the surface protective layer 5, a ratio Rdc/t between a cut level difference Rdc and a thickness t of the surface protective layer 5 is 0.15 or more and 0.44 or less; the thickness t of the surface protective layer 5 is 2 $\mu$m or more and 18 $\mu$m or less; and an absorption spectrum obtained from Fourier infrared spectrometry of the surface protective layer 5 has a ratio $I_{1095}/I_{1725}$ of 0.65 or more, between a maximum value $I_{1095}$ in a wavenumber range of 1085 to 1105 cm$^{-1}$ and a maximum value $I_{1725}$ in a wavenumber range of 1715 to 1735 cm$^{-1}$.

FIG.1

EP 4 656 373 A1

**Description**

[Technical Field]

The present invention relates to decorative sheets. Decorative sheets can be used, for example, for surface decoration or the like of building interiors and exteriors, fixtures, furniture, construction materials, flooring materials, etc.

[Background Art]

In recent years, as shown in PTL 1, a number of decorative sheets in which olefin-based resin is used (e.g., polypropylene sheets) have been proposed as alternative decorative sheets to polyvinyl chloride decorative sheets, which pose concerns about environmental protection issues. These decorative sheets, which are not made of vinyl chloride resins, suppress generation of toxic gas and the like during incineration.

Decorative sheets are commonly used in buildings to impart aesthetic properties or durability to the surfaces of wood, wood boards, metal plates, non-flammable boards, paper substrates, resin substrates, etc. by bonding the decorative sheets thereto via an adhesive or the like for formation of decorative panels. To impart aesthetic properties, patterns such as wood grain and stone grain that are formed using various printing methods, or plain surfaces with no patterns are selected according to needs and applications. Similarly, surface gloss is also an important factor of aesthetic properties, and is selected from a variety of glow levels from mirror-like high gloss to low gloss with no reflection, according to requirements and applications. Imparting durability is an important function of decorative sheets, in addition to imparting aesthetic properties. Durability relates to a comprehensive evaluation of scratch resistance or contamination resistance, and whether these characteristics can be maintained over a long period of time. Decorative sheets are used for architectural interior materials for housings or public facilities, architectural exterior materials for front doors or the like, surface materials for fixtures, and surface materials for home appliances. Being daily exposed to direct sunlight, wind, or rain, these decorative sheets are required to be extremely weather resistant.

To impart durability, a surface protective layer is formed, in general, on the outermost surface of decorative sheets. To adjust the gloss mentioned above, or to achieve low gloss in particular, it is common to add a matting agent (matting additive) to the surface protective layer. PTL 2, for example, proposes a decorative sheet taking into consideration of aesthetic properties (low gloss), scratch resistance, and contamination resistance.

On the other hand PTLs 3 to 7 each propose a method of producing a decorative sheet having a low gloss by forming wrinkles using excimer light having a wavelength of less than 200 nm.

[Citation List]

[Patent Literatures]

[0006]

　　PTL 1: JP3271022B
　　PTL 2: JP2019-119138A
　　PTL 3 WO2021/201105
　　PTL 4: JP2022-008024A
　　PTL 5: WO2022/054644
　　PTL 6: WO2022/054645
　　PTL 7: WO2022/054646

[Summary of the Invention]

[Technical Problem]

The present invention aims to provide a decorative sheet having a low gloss and imparting a moist feel.

[Solution to Problems]

According to an aspect of the present invention, there is provided a decorative sheet comprising a primary film layer and a surface protective layer provided to one side of the primary film layer, wherein the surface protective layer has a surface provided with an uneven structure including a plurality of ridge portions each protruding in a ridge-like shape; in the uneven structure of the surface protective layer, a ratio Rdc/t between a cut level difference Rdc and a thickness t of the surface protective layer is 0.15 or more and 0.44 or less; the thickness t of the surface protective layer is 2 μm or more and 18 μm or less; and an absorption spectrum obtained from Fourier infrared spectrometry of the surface protective layer has a ratio $I_{1095}/I_{1725}$ of 0.65 or more, between a maximum value $I_{1095}$ in a wavenumber range of 1085 to 1105 $cm^{-1}$ and a maximum value $I_{1725}$ in a wavenumber range of 1715 to 1735 $cm^{-1}$.

According to another aspect of the present invention, there is provided the decorative sheet according to the above aspect, wherein the surface protective layer has a gloss of less than 10.0.

According to still another aspect of the present invention, there is provided the decorative sheet according to any of the above aspects, wherein the ratio Rdc/t is 0.15 or more and 0.31 or less.

According to still another aspect of the present invention, there is provided the decorative sheet according to any of the above aspects, wherein the ratio Rdc/t is 0.15 or more and 0.25 or less.

According to still another aspect of the present invention, there is provided the decorative sheet according to any of the above aspects, wherein the ratio $I_{1095}/I_{1725}$ is 3.5 or less.

According to still another aspect of the present invention, there is provided the decorative sheet according to any of the above aspects, wherein the ratio $I_{1095}/I_{1725}$ is 0.7 or more.

According to still another aspect of the present invention, there is provided the decorative sheet according to any of the above aspects, wherein the ratio $I_{1095}/I_{1725}$ is 0.85 or more.

According to still another aspect of the present invention, there is provided the decorative sheet according to any of the above aspects, wherein the ratio $I_{1095}/I_{1725}$ is 2.2 or less.

According to still another aspect of the present invention, there is provided the decorative sheet according to any of the above aspects, wherein the ratio $I_{1095}/I_{1725}$ is 1.3 or less.

According to still another aspect of the present invention, there is provided the decorative sheet according to any of the above aspects, wherein the surface protective layer contains a cured product of a resin and particles; the particles have an average particle size of 3 μm or more and 11 μm or less; and the particles are contained in the surface protective layer in an amount of 3 parts by mass or more and 11 parts by mass or less relative to 100 parts by mass of the resin.

According to still another aspect of the present invention, there is provided the decorative sheet according to any of the above aspects, wherein the resin comprises an ionizing radiation curable resin.

According to still another aspect of the present invention, there is provided the decorative sheet according to any of the above aspects, wherein the resin comprises an acrylate

According to still another aspect of the present invention, there is provided the decorative sheet according to any of the above aspects, wherein the resin comprises a trifunctional acrylate containing a repeating structure; and the number of repeat units of the repeating structure is 3 or more and 20 or less.

According to still another aspect of the present invention, there is provided the decorative sheet according to any of the above aspects, wherein the resin comprises a tetrafunctional acrylate containing a repeating structure; and the number of repeat units of the repeating structure is 20 or more and 35 or less.

According to still another aspect of the present invention, there is provided the decorative sheet further comprising a pattern layer between the primary film layer and the surface protective layer.

According to still another aspect of the present invention, there is provided a decorative material including the decorative sheet according to any of the above aspects, and a substrate to which the decorative sheet is attached.

[Advantageous Effects of the Invention]

According to the present invention, a decorative sheet having a low gloss and imparting a moist feel can be provided.

[Brief Description of the Drawings]

Fig. 1 is a cross-sectional view illustrating a decorative material including a decorative sheet according to an embodiment of the present invention.

Fig. 2 is a cross-sectional view illustrating a decorative material including a decorative sheet according to another embodiment of the present invention.

Fig. 3 is a cross-sectional view illustrating a surface protective layer of the decorative sheet of Fig. 1 or 2.

Fig. 4 is a microscopic image of a surface protective layer of a decorative sheet according to an example of the present invention.

[Description of the Embodiments]

Referring to the drawings, a configuration of a decorative sheet according to an embodiment of the present invention will be described. The embodiments described below are more specific implementations of any of the aspects set forth above. The matters described below can be incorporated into the aspects set forth above, either alone or in combination.

In the drawings referred to below, components having equivalent or similar functions are designated with like reference signs to omit repeated explanations. The drawings are only schematic, and the relationship between the thickness and planar dimensions, the thickness ratio between layers, and the like are not to scale.

The embodiments described below are merely examples of configurations for embodying the technical idea of the present invention, and the technical idea of the present invention should not be construed as limiting the materials, shapes, structures, and the like of the components to those described below. The technical idea of the present invention can be modified in various ways within the technical scope defined in the claims.

<1> Decorative material and decorative sheet

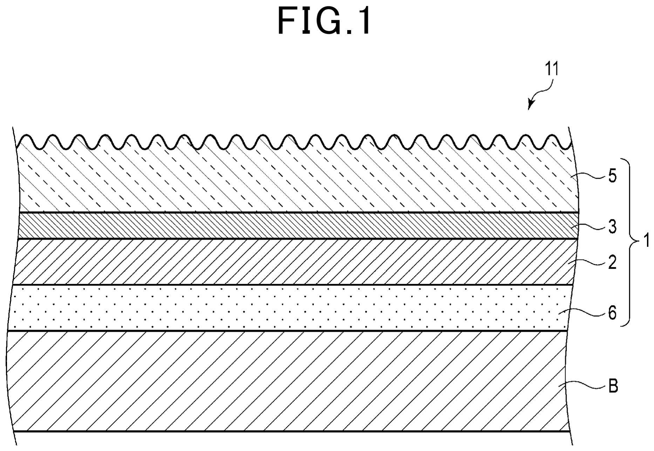

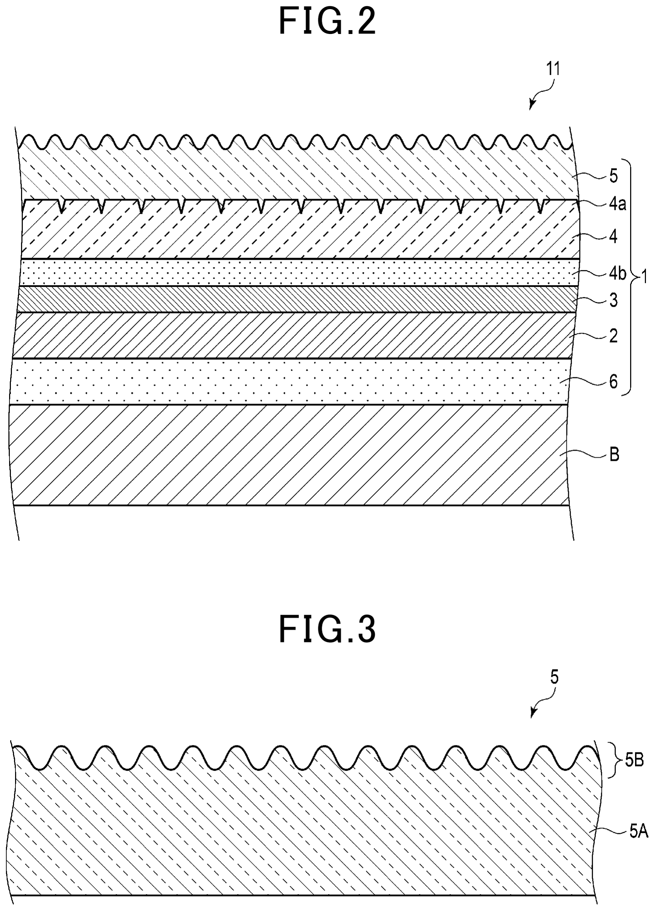

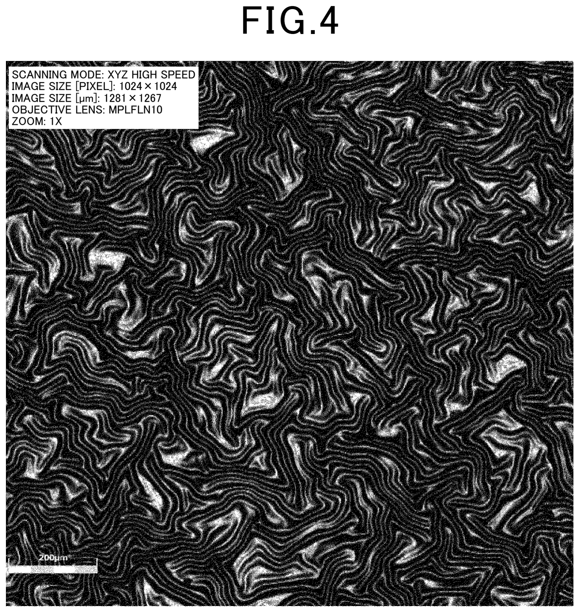

Fig. 1 is a cross-sectional view illustrating a decorative material including a decorative sheet according to an embodiment of the present invention. Fig. 2 is a cross-sectional view illustrating a decorative material including a decorative sheet according to another embodiment of the present invention. Fig. 3 is a cross-sectional view illustrating a surface protective layer of the decorative sheet of Fig. 1 or 2. Fig. 4 is a microscopic image of a surface protective layer of a decorative sheet according to an example of the present invention.

The cross section shown in Fig. 3 is a cross section taken along the thickness direction of the surface protective layer. The microscopic image shown in Fig. 4 is an image in plan view captured using a laser microscope (OLS-4000 manufactured by Olympus Corporation).

A decorative material 11 shown in each of Figs. 1 and 2 includes a substrate B and a decorative sheet 1 attached to the substrate B. The decorative material 11 here is a decorative panel. The decorative panel may be flat, or may be curved or folded. The decorative material 11 may have other shapes than a plate.

The substrate B here is a board material. The board material may, for example, be a wood board, inorganic board, metal board, or composite board made of multiple materials. The substrate B may have other shapes than a plate.

The decorative sheet 1 shown in Fig. 1 includes a primary film layer 2 having one side, i.e., the front surface, provided with a pattern layer 3 and a surface protective layer 5 in this order from the primary film layer 2 side, and another side (i.e., the surface facing the substrate B) provided with a primer layer 6. In Fig. 1, one or more of the pattern layer 3 and the primer layer 6 may be omitted.

The decorative sheet 1 shown in Fig. 2 includes a primary film layer 2 having one side, i.e., the front surface, provided with a pattern layer 3, an adhesive resin layer 4b, a transparent resin layer 4, and a surface protective layer 5 in this order from the primary film layer 2 side, and another side (i.e., the surface facing the substrate B) provided with a primer layer 6. The transparent resin layer 4 is imparted with an embossed uneven pattern (embossed pattern 4a). In Fig. 2, one or more of the pattern layer 3, the adhesive resin layer 4b, the transparent resin layer 4, and the primer layer 6 may be omitted. The embossed pattern 4a does not necessarily have to be imparted.

Due to the need to have scratch resistance and the like, multiple layers of at least one of the transparent resin layer 4 and the surface protection layer 5 may be laminated. Considering adhesion between the layers, other known layers may be arranged in the configuration. Also, a concealing layer or the like (not shown) may be provided between the primary film layer 2 and the primer layer 6.

Next, the layers constituting the decorative sheet 1 will be individually described.

<1.1> Primary film layer

The primary film layer 2 can be made of any material selected, for example, from paper, synthetic resins, synthetic resin foam, rubber, non-woven fabric, synthetic paper, metal foil, etc. Examples of the paper include tissue paper, titanium paper, and resin-impregnated paper. Examples of the synthetic resins include polyethylenes, polypropylenes, polybutylenes, polystyrenes, polycarbonates, polyesters, polyamides, ethylene-vinyl acetate copolymers, polyvinyl alcohols, and acrylic resins. Examples of the rubber include ethylene-propylene copolymer rubber, ethylene-propylene-diene copolymer rubber, styrene-butadiene copolymer rubber, styrene-isoprene-styrene block copolymer rubber, styrene-butadiene-styrene block copolymer rubber, and polyurethanes. As the non-woven fabric, organic or inorganic non-woven fabric can be used. Examples of the metal used for the metal foil include aluminum, iron, gold, and silver. The primary film layer 2 may be a sheet made of a resin composition which is the same as that of the transparent resin layer 4. In this case, the primary film layer 2 can be obtained by forming a resin material or a resin composition in a film-like shape. The forming method may be, for example, calendar molding, extrusion molding, or the like.

The primary film layer 2 is preferred to include a colored layer obtained by mixing an inorganic pigment into a synthetic resin, and a skin layer formed of a synthetic resin. The skin layer is preferred to have a thickness of 3 $\mu$m or more and 20 $\mu$m or less, and the thickness ratio between the skin layer and the colored layer is preferred to be 1:6 to 1:50. If the primary film layer 2 is formed by coextrusion, the outermost layer is preferred to be a skin layer without containing a pigment, because if the colored layer is the outermost layer, the pigment components contained in the colored layer may bleed, contaminating the extruder's T-die and rolls during conveyance. It is preferred that a skin layer is provided on each of both sides of the colored layer. If the thickness of the skin layer is increased to increase the ratio thereof to the colored layer, concealment properties may be deteriorated due to the ratio of the colored layer being decreased, and this is not preferred.

The primary film layer 2 is preferred to have a thickness of 50 $\mu$m or more and 150 $\mu$m or less. A primary film layer 2 with a thickness of less than 50 $\mu$m may deteriorate the function of covering the unevenness (roughness) of the primer layer. However, a primary film layer 2 with a thickness exceeding 150 $\mu$m may cause defects such as blushing and cracking in the bending process.

(Inorganic pigment)

As the inorganic pigment, any known inorganic pigment for imparting concealment properties, as represented by titanium oxide, can be used. The primary film layer 2 has a function of concealing patterns of the substrate B. In order to achieve concealment properties required from the perspective of aesthetic properties of the decorative sheet 1, light transmittance is preferred to be 40% or less. Low concealment properties may cause mixing of the patterns of the pattern layer 3 with the patterns of the substrate B, and this is not preferred. By containing an inorganic pigment, a decorative sheet 1 with good concealment properties can be obtained. The amount of the inorganic pigment mixed is preferred to be 5 parts by mass or more and 50 parts by mass or less, relative to 100 parts by mass of the resin material. If the mixed amount of the inorganic pigment is small, concealment properties may be deteriorated, but if the mixed amount is 50 parts by mass or more, the primary film layer 2 may become brittle, and this is not preferred. The inorganic pigment to be contained may be, although not especially limited, a natural inorganic pigment or a synthetic inorganic pigment. Examples of the natural inorganic pigment include earth pigments, calcined earth, and mineral pigments. The synthetic inorganic pigment may include oxide pigments, hydroxide pigments, sulfide pigments, silicate pigments, phosphate pigments, carbonate pigments, metal powder pigments, and carbon pigments. One, or two or more of the natural inorganic pigments and the synthetic inorganic pigments may be mixed, and this mixed pigment may be used as a synthetic inorganic pigment. An organic pigment such as carbon black may be combined for use as a synthetic inorganic pigment.

The inorganic pigment may additionally contain an additive such as a fatty acid metal salt to improve dispersibility or extrusion suitability.

If a substrate such as an olefin-based substrate having an inactive surface is used as the primary film layer 2, the front and rear surfaces of the primary film layer 2 are preferred to undergo corona treatment, plasma treatment, ozone treatment, electron beam treatment, UV treatment, bichromate treatment, etc.

<1.2> Pattern layer

The pattern layer 3 for imparting the decorative sheet 1 with a design pattern may be provided to the front surface of the primary film layer 2. The design pattern may be, for example, of wood grain, stone, sand, tile, brick, fabric, grained leather, geometric figure, or the like.

According to the degree of aesthetic properties intended, a base solid ink layer (not shown) may be provided between the primary film layer 2 and the pattern layer 3. The base solid ink layer may be provided covering the entire surface of the primary film layer 2. As necessary, considering concealment properties or the like, the base solid ink layer may be a multilayer having two or more layers. The pattern layer 3 may be formed by laminating as many layers as necessary to express the desired aesthetic properties. Thus, the pattern layer 3 and the base solid ink layer can be combined in various ways according to the desired design, i.e., the design desired to be expressed, although the combinations are not especially limited.

The materials constituting the base solid ink layer and the pattern layer 3 are not especially limited. For example, the materials constituting the base solid ink layer and the pattern layer 3 may be a printing ink or a coating agent obtained by dissolving and dispersing a matrix and a colorant, such as a dye and a pigment, in a solvent. The matrix may be various synthetic resins, such as oily nitrocellulose resins, two-part urethane resins, acrylic resins, styrene resins, polyester resins, urethane resins, polyvinyl- resins, alkyd resins, epoxy resins, melamine resins, fluororesins, silicone resins, and rubber resins; mixtures or copolymers thereof, or the like. The colorant may include inorganic pigments, such as carbon black, titanium white, zinc white, rouge, chrome yellow, Prussian blue and cadmium red; organic pigments, such as azo pigments, lake pigments, anthraquinone pigments, phthalocyanine pigments, isoindolinone pigments, and dioxazine pigments; and mixtures thereof. As the solvent, toluene, xylene, ethyl acetate, butyl acetate, methyl alcohol, ethyl alcohol, isopropyl alcohol, acetone, methyl ethyl ketone, methyl isobutyl ketone, cyclohexanone, water, or a mixture thereof may be used.

Furthermore, in order to impart various functions, the base solid ink layer and the pattern layer 3 may additionally contain functional additives such as an extender pigment, plasticizer, dispersant, surfactant, tackifier, adhesion aid, drying agent, curing agent, curing accelerator, and curing retarder.

The base solid ink layer and the pattern layer 3 can be formed using various printing methods, such as gravure printing, offset printing, screen printing, electrostatic printing, and inkjet printing. Also, the base solid ink layer, which covers the entire surface of the primary film layer 2, can also be formed using various coating methods such as roll coating, knife coating, micro gravure coating, and die coating. From these printing methods and coating methods, any method may be separately selected depending on the layer to be formed; however, it is more efficient to select the same method for batch processing.

The thickness of the pattern layer 3 is preferred to be 3 $\mu$m or more and 20 $\mu$m or less. If the thickness of the pattern layer 3 is in this range, printing can be made clearer, while improving printing workability when producing the decorative sheet 1, and reducing the production cost.

<1.3> Transparent resin layer

The resin material used as a main component of the transparent resin layer 4 is preferred to comprise an olefin resin, including polypropylene, polyethylene, and polybutene. Other than this, the resin material may include those which are obtained by homopolymerization or copolymerization of two or more $\alpha$-olefins (e.g., propylene, 1-butene, 1-pentene, 1-hexene, 1-heptene, 1-octene, 1-nonene, 1-decene, 1-undecene, 1-dodecene, tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-pentene, 4-ethyl-1-hexene, 3-ethyl-1-hexene, 9-methyl-1-decene, 11-methyl-1-dodecene, and 12-ethyl-1-tetradecene); and those which are obtained by copolymerization of ethylene or an $\alpha$-olefin with other monomers, such as an ethylene-vinyl acetate copolymer, ethylene-vinyl alcohol copolymer, ethylene-methyl methacrylate copolymer, ethylene-ethyl methacrylate copolymer, ethylene-butyl methacrylate copolymer, ethylene-methyl acrylate copolymer, ethylene-ethyl acrylate copolymer, and ethylene-butyl acrylate copolymer. When improving the surface strength of the decorative sheet 1, highly crystalline polypropylene is preferred to be used.

The main component mentioned in the present specification, if not especially specified, refers to a component forming 90 mass% or more of the object material.

If the transparent resin layer 4 is provided, the thickness of the transparent resin layer 4 is preferred to be 50 $\mu$m or more and 100 $\mu$m or less. If the thickness is less than 50 $\mu$m, the effect of improving scratch resistance of the surface of the transparent resin layer 4 may be reduced, and the significance of providing the transparent resin layer 4 is reduced. A transparent resin layer 4 with a thickness exceeding 100 $\mu$m may excessively increase the rigidity of the decorative sheet 1, and may cause defects such as blushing and cracking in the bending process.

However, if the surface protective layer 5 is provided on the transparent resin layer 4, the thickness of the transparent resin layer 4 may be less than 50 $\mu$m.

The resin composition constituting the transparent resin layer 4 may contain, as necessary, various functional additives such as thermal stabilizer, photostabilizer, UV absorber, blocking agent, catalyst scavenger, colorant, light scattering agent, and gloss adjuster. These various functional additives can be suitably selected from known additives.

For the adhesive used for adhering the pattern layer 3 to the transparent resin layer 4, any material can be suitably selected according to the adhesion method. Examples of the adhesion method as a lamination method include heat lamination, extrusion lamination, and dry lamination. The adhesive can be selected, for example, from acrylic adhesives, polyester adhesives, polyurethane adhesives, and the like. Usually, due to their cohesive strength, two-part curing type urethane materials using reaction between isocyanate and polyol are preferred. The lamination method for the transparent resin layer 4 is not especially limited, but in general, a method using thermal pressure, an extrusion lamination method, a dry lamination method, or the like is used.

The transparent resin layer 4 may be imparted with an embossed uneven pattern (embossed pattern 4a). The embossed pattern 4a can be embedded with ink to further enhance the aesthetic properties. When providing the embossed pattern 4a, the method may be a method in which a sheet is laminated using any of various methods and then the sheet is embossed using heat and pressure, or a method in which an uneven pattern is provided to a cooling roll to perform embossing simultaneously with extrusion lamination.

Alternatively, another method can be used, in which the pattern layer 3 that has been embossed simultaneously with extrusion is bonded to the transparent resin layer 4 using heat or dry lamination.

To improve adhesion between the pattern layer 3 and the transparent resin layer 4, the adhesive resin layer 4b may be provided between the pattern layer 3 and the transparent resin layer 4. Specifically, if a greater lamination strength is required to be achieved using the extrusion lamination method, the adhesive resin layer 4b may be provided between the transparent resin layer 4 and the adhesive. If the adhesive resin layer 4b is provided, the transparent resin layer 4 and the adhesive resin layer 4b can be laminated together using a coextrusion method. The adhesive resin layer 4b can be obtained by acid-modifying a resin such as a propylene, polyethylene, acrylic resin, or the like. The adhesive resin layer 4b is preferred to have a thickness of 2 μm or more for the purpose of improving adhesion.

When providing the transparent resin layer 4 with the embossed pattern 4a, the uneven structure can be expressed using a cut level difference Rdc. The cut level difference Rdc is a parameter for surface conditions defined in JIS B 0601:2013. The cut level difference Rdc indicates a cut level difference of a roughness curve and expresses steepness of the uneven shape. In this disclosure, the highest peak position of the roughness curve is taken to be the criterion for a cut level c. Also, in this disclosure, c(Rmr1) is taken to be a cut level when the loading length ratio Rmr of the roughness curve is 10%, and c(Rmr2) is taken to be a cut level when the loading length ratio Rmr of the roughness curve is 25%. The cut level difference Rdc (μm) of the roughness curve refers to a difference between the cut level c(Rmr1) and the cut level c(Rmr2).

Rdc of the transparent resin layer 4 is preferred to be 0.2 μm or more and 2.9 μm or less. If Rdc is smaller than 0.2 μm, the effect of embedding the ink, etc. becomes weaker; however, if Rdc becomes larger than 2.9 μm, the moist feel according to the present invention may become a rough feel when the surface protective layer 5 is formed on the transparent resin layer 4, and this is not preferred. Rdc of the transparent resin layer 4 is preferred to be 0.2 μm or more and 1.0 μm or less.

<1.4> Surface protective layer

As shown in Fig. 3, the surface protective layer 5 includes a core portion 5A and ridge portions 5B protruding in a ridge-like shape from one side of the core portion 5A. With this configuration, an uneven shape is formed on the surface protective layer 5. In the decorative sheet 1 according to the present embodiment, the term ridge-like refers to shapes which are elongated and raised, and continue linearly in plan view. The ridge portions 5B may be curved or straight in plan view, but are preferred to be curved from the perspective of fingerprint resistance of the decorative sheet 1. In the present embodiment, the ridge portions 5B refer to, for example, the portions from the lowest part to the highest part of the uneven shape provided on the surface protection layer 5, and the core portion 5A refers to the portion of the surface protective layer 5 excluding the ridge portions 5B. It should be noted that the cross section of the ridge portions 5B taken along the thickness direction of the surface protective layer 5 may have a sinusoidal shape. The sinusoidal shape here refers to a shape in which the line from the lowest position to the highest position of the ridge portions 5B can be expressed as a sine wave.

Fig. 3 is a schematic cross-sectional view illustrating a cross section of the ridge portions 5B of the surface protective layer 5 (cross section taken along the thickness direction of the surface protective layer 5), and Fig. 4 is an image in plan view showing the configuration of the surface of the surface protective layer 5. Fig. 4 is an image in plan view captured using a laser microscope (OLS-4000 manufactured by Olympus Corporation).

As can be seen in the image in plan view shown in Fig. 4, the ridge portions 5B are elongated and raised, and continue linearly in plan view. As will be described later, the ridge portions 5B are formed by irradiating the surface of an ionizing radiation curable resin with light of a specific wavelength to cause buckling in the cured film of the ionizing radiation curable resin.

The shape of such ridge portions 5B can be expressed by a ratio RSm/Ra between a surface roughness index RSm (μm) in the horizontal direction (the direction parallel to the plane of the surface protective layer 5, i.e., the left-right direction in Fig. 3) and a surface roughness index Ra (μm) in the vertical direction (the depth direction of the ridge portions 5B or the thickness direction of the surface protective layer 5, i.e., the up-down direction in Fig. 3). The ratio RSm/Ra is preferably 10 or more and 300 or less. It is more preferred that the ratio RSm/Ra is 10 or more and 250 or less. If the ratio RSm/Ra becomes smaller, the ridge portions 5B may be finely shaped accordingly, and therefore stains may become difficult to wipe off, resulting in poor contamination resistance. If the ratio RSm/Ra becomes larger, the spacing between the ridges tends to become wider accordingly, resulting in a higher gloss. In this disclosure, Ra and RSm are values measured using a line roughness gauge, i.e., values measured according to JIS B 0601.

In the uneven structure of the surface protective layer 5, the ratio Rdc/t between the cut level difference Rdc and the thickness t of the surface protective layer 5 (hereinafter also simply referred to as ratio Rdc/t) is preferred to be 0.15 or more and 0.44 or less. The ratio Rdc/t is more preferred to be 0.15 or more and 0.31 or less, and even more preferred to be 0.15 or more and 0.25 or less.

As described above, the cut level difference Rdc is a parameter for surface conditions defined in JIS B 0601:2013. The cut level difference Rdc indicates a cut level difference of the roughness curve and expresses steepness of the uneven shape. In this disclosure, the highest peak position of the roughness curve is taken to be the criterion for a cut level c. Also, in this disclosure, c(Rmr1) is taken to be a cut level when the loading length ratio Rmr of the roughness curve is 10%, and c(Rmr2) is taken to be a cut level when the loading length ratio Rmr of the roughness curve is 25%. The cut level difference Rdc (μm) of the roughness curve refers to a difference between the cut level c(Rmr1) and the cut level c(Rmr2). By obtaining the ratio Rdc/t by dividing the cut level difference Rdc by the thickness t of the surface protective layer 5, the steepness of the uneven shape per unit thickness of the surface protective layer 5 can be expressed.

In the surface of the surface protective layer, the region corresponding to the portion where the loading length ratio Rmr of the roughness curve is less than 10% is the region first contacted by fingertips when the surface protective layer is pressed with fingers. The moist feel is less affected by the region in the surface of the surface protective layer which is first contacted by fingertips when the surface protective layer is pressed with fingers. The moist feel is also less affected by the region in the surface of the surface protective layer, which is first contacted by fingertips when the surface protective layer is pressed with fingertips with an extremely high pressure. The moist feel is greatly affected by the slope of the region in the surface of the surface protective layer, which is first contacted by fingertips when the surface protective layer is pressed with fingers with only a relatively high pressure. This region is the region corresponding to the portion where the loading length ratio Rmr of the roughness curve is in the range of 10% to 25%.

If the ratio Rdc/t is 0.15 or more and 0.44 or less, the slope of the uneven shape is relatively gentle. In this case, when the surface of the decorative sheet is pressed with fingers and the fingers are slid across the surface, the push-in resistance due to contact between the fingers and the surface is small, and the contact area between the fingers and the convex surface gradually increases, providing a skin feel as if the surface of the decorative sheet were sticking to the fingers. This skin feel can be associated with the moist feel.

However, if the ratio Rdc/t becomes larger than 0.44, the slope of the uneven shape becomes steeper. In this case, when the surface of the decorative sheet is pressed with fingers and the fingers are slid across the surface, the push-in resistance due to contact between the fingers and the surface becomes larger, and the presence of unevenness is felt. This skin feel can be associated with the rough feel.

If the ratio Rdc/t becomes smaller than 0.15, the slope of the uneven shape becomes quite gentle. In this case, when the surface of the decorative sheet is pressed with fingers and the fingers are slid across the surface, the push-in resistance due to contact between the fingers and the surface is small, the contact area between the fingers and the convex surface is large from the start of the pressing action, and increase in contact area accompanying the pressing action is fairly gradual. Therefore, in this case, a skin feel as if the surface of the decorative sheet were sticking to the fingers can be obtained, and on the other hand, due to the slope of the uneven shape being quite gentle, a smooth feel can be obtained and it becomes stronger as an overall impression, compared to the case of the moist feel described above. This skin feel can be associated with a smooth feel.

The thickness t of the surface protective layer 5 is preferred to be 2 $\mu$m or more and 18 $\mu$m or less. The thickness t of the surface protective layer 5 is more preferred to be 3 $\mu$m or more and 10 $\mu$m or less. If the surface protective layer 5 is made thicker, the ratio Rdc/t tends to become larger. If the surface protective layer 5 on the transparent resin layer 4 having unevenness is made thinner, the influence of the unevenness of the transparent resin layer 4 becomes greater, and the ratio Rdc/t tends to become larger. For this reason, if the surface protective layer 5 is excessively thick or excessively thin, the moist feel may be difficult to achieve. If the surface protective layer 5 is excessively thin, low gloss may be difficult to achieve, and if it is excessively thick, formability may be deteriorated and blushing may occur when bent.

The thickness of the surface protective layer 5 corresponds to the thickness of a layer having an apparent area and volume equal to those of the surface protective layer 5 and having a flat surface. The thickness of the surface protective layer 5 can be calculated, for example, from the following method. First, an image of a cross section taken along the direction parallel to the thickness direction of the surface protective layer 5 and perpendicular to the length direction of the ridge portions 5B is captured. Next, the dimension of the surface protective layer 5 in the width direction of the ridge portions 5B and the area of the cross section of the surface protective layer 5 are calculated from the image of the cross section. The thickness of the surface protective layer 5 is obtained by dividing the area by the dimension. The thickness of the surface protective layer 5 is obtained by calculating a 25-point average by observing the cross section using a scanning electron microscope. Specifically, the thickness of the surface protective layer 5 can be obtained as in the examples described later. If the surface protective layer coating liquid described later does not contain a solvent, the thickness of the coating film formed of the surface protective layer coating liquid may be equal to the thickness of the surface protective layer 5.

The surface protective layer 5 can be formed, for example, using various printing methods, such as gravure printing, offset printing, screen printing, electrostatic printing, and inkjet printing. Also, the surface protective layer 5, which covers the entire front-side surface of the primary film layer 2, can also be formed using various coating methods, such as roll coating, knife coating, micro gravure coating, and die coating. From these printing methods and coating methods, a method may be separately selected depending on the layer to be formed, or the same method may be selected to carry out batch processing.

The pattern layer 3 and the surface protective layer 5 may be coordinated from the perspective of aesthetic properties. If coordinated, gravure printing is preferred to be used because after forming the pattern layer 3, the surface protective layer 5 is required to be immediately formed. Gravure printing is also preferred to be used because it allows for relatively high speed printing and is advantageous in terms of costs. The term coordinated refers to that 50% or more, preferably 70% or more, and more preferably 90% or more of the surface protective layer 5 as formed overlaps with the patterns of the pattern layer 3 in plan view.

In order to adjust the thickness of the surface protective layer 5, the amount of coating may be adjusted when performing the printing methods or the coating methods mentioned above. Specifically, in these printing methods or coating methods, two base sheets (including primary film layers) with and without the surface protective layer 5 may be formed, so that the amount of coating can be calculated from the mass difference therebetween.

The surface protective layer 5 preferably comprises an ionizing radiation curable resin as a main material. The term main material refers to the material being contained preferably in an amount of 60 parts by mass or more, more preferably 70 parts by mass or more, and most preferably 80 parts by mass or more, relative to 100 parts by mass of the surface protective layer 5. The term ionizing radiation refers to charged particle beams such as electron beams. The ionizing radiation curable resin can be cured by ionizing radiation irradiation. The ionizing radiation curable resin can also be cured by UV irradiation. The ionizing radiation curable resin used here can be cured by irradiation of light having a wavelength of 200 nm or less, while having a large absorption coefficient for this light. The ionizing radiation curable resin constituting the surface protective layer 5 may be any known resin, such as various monomers or commercially available oligomers, examples thereof include (meth)acrylic resins, silicone resins, polyester resins, urethane resins, amide resins, and epoxy resins. The ionizing radiation curable resin may be an aqueous resin or a non-aqueous (organic solvent-based) resin, and may be used alone or in combination of two or more.

The ionizing radiation curable resin is preferred to contain an acrylate as a main component. The main component of the ionizing radiation curable resin refers to that the component occupies 60 mass% or more in the ionizing radiation curable resin. The ionizing radiation curable resin is preferred to contain 70 parts by mass or more of an acrylate, and more preferably 80 parts by mass or more.

The acrylate is preferred to be a bifunctional or higher acrylate, and is more preferred to be a trifunctional or higher acrylate. From the perspective of obtaining a surface protective layer 5 having excellent scratch resistance, the acrylate is preferred to be a trifunctional or higher acrylate. There is no upper limit to the number of functional groups of the acrylate, but for example, it may be six or less.

The acrylate is preferred to contain a repeating structure. For example, the repeating structure may be any of an ethylene oxide (EO) structure, propylene oxide (PO) structure, and ε-caprolactone (CL) structure. It is preferred that the repeating structure is an ethylene oxide or propylene oxide structure. In the acrylate, the repeating structure can be present between the acryloyl group and the methylol group in an open ring state.

The number of repeat units of the repeating structure is preferred to be three or more. If an acrylate with a large number of repeat units is used, the cured film is likely to expand in the in-plane direction in the first irradiation step described later, and therefore wrinkles corresponding to the ridge portions 5B are more likely to appear on the surface of the coating film. Use of an acrylate with a greater number of repeat units tends to increase the ratio Rdc/t. However, if the number of repeat units is excessively large, the crosslink density may be lowered and the scratch resistance of the surface protective layer may be deteriorated.

In a preferred mode, the ionizing radiation curable resin may be a trifunctional acrylate containing a repeating structure. Examples of the trifunctional acrylate containing a repeating structure that can be used include an EO-, PO- or CL-modified trimethylolpropane triacrylate, glycerin triacrylate, isocyanurate triacrylate, and pentaerythritol triacrylate. If gravure printing is used as the coating method, the ionizing radiation curable resin may have an optimal viscosity in the range of 10 to 500 mPa·s. Therefore, use of trimethylolpropane triacrylate or glycerin triacrylate as the trifunctional acrylate resin is preferred because the viscosity can be in the optimal viscosity range. Use of resins with skeletons inducing hydrogen bonds or π-π stacking is not preferred because most of these resins have a high viscosity of 500 mPa·s or more. For viscosity adjustment, organic solvents or low-viscosity bifunctional acrylate resins may be added. However, from the perspective of environmental impact, it is preferred that organic solvents are not used. Use of bifunctional acrylate resins is not preferred because scratch resistance may be deteriorated if excessively added. For this reason, the amount of the bifunctional acrylate resin added is preferred to be in the range of 10 mass% or more and 30 mass% or less relative to the content (mass) of the trifunctional acrylate resin.

In the trifunctional acrylate containing a repeating structure, the number of repeat units of the repeating structure is preferred to be 3 or more, more preferred to be 3 or more and 30 or less, and even more preferred to be 3 or more and 20 or less. If vacuum UV light (VUV light) is applied when the number of repeat units is small, it may be difficult for the cured film of the ionizing radiation curable resin constituting the surface protective layer 5 to expand in the in-plane direction, and therefore wrinkles are not necessarily sufficiently formed and the surface protective layer 5 is less likely to have a low gloss. If the number of repeat units is large, the crosslink density tends to be reduced and the scratch resistance of the surface protective layer 5 tends to be deteriorated.

In another preferred mode, the ionizing radiation curable resin may be a tetrafunctional acrylate containing a repeating structure. As the tetrafunctional acrylate containing a repeating structure, for example, an EO-, PO- or CL-modified pentaerythritol tetraacrylate can be used. In the tetrafunctional acrylate containing a repeating structure, the number of repeat units of the repeating structure is preferred to be 12 or more, more preferred to be 12 or more and 50 or less, even more preferred to be 20 or more and 50 or less, and even more preferred to be 20 or more and 35 or less. If VUV light is applied when the number of repeat units is small, it may be difficult for the cured film of the ionizing radiation curable resin constituting the surface protective layer 5 to expand in the in-plane direction, and therefore wrinkles are not necessarily sufficiently formed and the surface protective layer 5 is less likely to have a low gloss. If the number of repeat units is large, the crosslink density tends to be reduced and the scratch resistance of the surface protective layer 5 tends to be deteriorated.

The number of repeat units of the repeating structure can be analyzed using an MALDI-TOF-MS analysis. The ionizing radiation curable resin may have a molecular weight distribution. If there is a molecular weight distribution, the number of repeat units is taken to be the number of repeat units corresponding to the molecular weight having the most intense peak in the MALDI-TOF-MS mass spectrum. As will be described later, the number of repeat units of the repeating structure may be obtained based on a ratio $I_{1095}/I_{1725}$ which is calculated from Fourier infrared spectrometry.

In the absorption spectrum obtained from Fourier infrared spectrometry of the surface protective layer 5, the ratio $I_{1095}/I_{1725}$ between the maximum value $I_{1095}$ in the wavenumber range of 1085 to 1105 cm$^{-1}$ and the maximum value $I_{1725}$ in the wavenumber range of 1715 to 1735 cm$^{-1}$ is preferred to be 0.65 or more. The ratio $I_{1095}/I_{1725}$ being less than 0.65 means that the number of repeat units is small, and therefore, when VUV light is applied, it may be difficult for the cured film of the ionizing radiation curable resin constituting the surface protective layer 5 to expand in the in-plane direction, and therefore wrinkles are not necessarily sufficiently formed and the surface protective layer 5 is less likely to have a low gloss. The ratio $I_{1095}/I_{1725}$ is more preferred to be 0.7 or more, and even more preferred to be 0.85 or more.

If the ratio $I_{1095}/I_{1725}$ is excessively large, the crosslink density may be reduced to deteriorate scratch resistance of the surface protective layer 5. Therefore, the ratio $I_{1095}/I_{1725}$ is preferred to be 3.5 or less. The ratio $I_{1095}/I_{1725}$ is more preferred to be 2.2 or less, and even more preferred to be 1.3 or less.

Fourier infrared spectrometry will be described.

Infrared light with a wavelength in the range of 2.5 μm to 25 μm can alter the vibrational or rotational states of molecules. The energy required for altering the vibrational or rotational states differs depending on the molecular structures. This is used in infrared spectrometry which is a measurement method of obtaining information related to chemical structures or states of materials.

For example, measurements are performed as follows in Fourier infrared spectrometry. First, light from a light source is allowed to be obliquely incident on a semi-transmissive mirror to split the light into two light fluxes of transmitted light and reflected light. The light flux transmitted through the semi-transmissive mirror is reflected by a fixed mirror and is allowed to be obliquely incident again on the semi-transmissive mirror. The light flux reflected by the semi-transmissive mirror is reflected by a movable mirror and is allowed to be obliquely incident again on the semi-transmissive mirror. The light flux reflected by the semi-transmissive mirror in the reflected light from the fixed mirror is combined with the light flux transmitted through the semi-transmissive mirror in the reflected light from the movable mirror to produce interference waves. While changing the distance from the semi-transmissive mirror to the movable mirror, the interference waves are applied to a sample and, at the same time, the intensity of light transmitted through the sample is measured. The intensity data thus obtained is separated into intensities of individual wavenumber components by calculation (Fourier transformation) to obtain a transmittance spectrum.

In the Fourier infrared spectrometry used here, instead of measuring the transmitted light intensity in the above-mentioned Fourier infrared spectrometry, the reflected light intensity is measured using the following total reflection measurement method (ATR method).

In Fourier transform infrared spectrometry using the ATR method, the interference waves are allowed to be incident on a measurement prism which is brought into contact with the surface of a sample, instead of allowing the interference waves to be directly incident on the sample. The interference waves are allowed to be incident on the measurement prism such that total reflection may occur at the interface between the prism and the sample. In this way, evanescent waves penetrate into the region of the sample near the interface, and light having a specific wavenumber component is absorbed by molecules in this region. In the Fourier transform infrared spectrometry using the ATR method, the intensity of reflected light is measured, instead of measuring the intensity of transmitted light. After that, the intensity data thus obtained is separated into intensities of individual wavenumber components by calculation (Fourier transformation) to obtain an ATR spectrum.

The penetration depth (penetration depth) of the evanescent waves increases as the wavelength becomes longer. Therefore, the baseline of an ATR spectrum, with the horizontal axis representing wavelength and the vertical axis representing reflected light intensity (or reflectance), slopes downward to the right. The penetration depth of the evanescent waves is also influenced by the incidence angle of the interference waves on the interface, or the refractive indices of the prism and the sample. Therefore, the ATR spectrum is corrected by the reciprocal of the wavelength, etc. By performing such a correction, a spectrum having a peak intensity ratio similar to that of the above transmittance spectrum can be obtained. By transforming this spectrum, an absorption spectrum, with the horizontal axis representing wavenumber and the vertical axis representing absorbance, can be obtained.

The penetration depth of the evanescent waves, which is small, can be adjusted by the incidence angle of the interference waves or the refractive index of the prism. Thus, according to the Fourier transform infrared spectrometry using the ATR method, the baseline of the object to be measured is prevented from becoming noise even when the object is a thin layer. Also, according to the Fourier transform infrared spectrometry using the ATR method, non-destructive measurement can be performed if only the object to be measured is exposed on the surface of the sample.

As described above, the ratio $I_{1095}/I_{1725}$ is in the predetermined range in the absorption spectrum obtained from Fourier infrared spectrometry of the surface protective layer 5. The maximum value $I_{1095}$ in the wavenumber range of 1085 to 1105 cm$^{-1}$ is a value related to the number of ether bonds contained in the surface protective layer 5. Also, the maximum value $I_{1725}$ in the wavenumber range of 1715 to 1735 cm$^{-1}$ is a value related to the number of ester bonds. Accordingly, the ratio $I_{1095}/I_{1725}$ corresponds to the ratio of the number of ether bonds and the number of functional groups in the acrylate contained in the ionizing radioactive resin of the surface protective layer coating liquid described later.

The surface protective layer 5 may contain particles. Addition of particles with most suitable size and most suitable content can form a uniform surface. Examples of the particles include particles of organic materials such as polyethylene (PE) wax, polypropylene (PP) wax, and resin beads, and particles of inorganic materials such as silica, glass, alumina, titania, zirconia, calcium carbonate, and barium sulfate. The average particle size (D50) is preferred to be 3 μm or less. The average particle size (D50) is more preferred to be 3 μm or more and 11 μm or less, and even more preferred to be 4 μm or more and 10 μm or less.

If the surface protective layer 5 contains particles, wrinkles can be produced more uniformly on the surface of the coating film in the first irradiation step described later. If the average particle size (D50) becomes larger, the ratio Rdc/t tends to be lowered. For this reason, if the average particle size (D50) is excessively small or excessively large, the moist feel may be difficult to achieve. If particles with a large size are used, particles are likely to shed from the surface protective layer 5, and it may become difficult to achieve high scratch resistance. If particles with a small size are used, the effect of uniformly producing wrinkles may be small.

The average particle size (D50) refers to a median diameter (D50) measured using a laser diffraction/scattering particle size analyzer. If the surface protective layer coating liquid contains particles, the surface protective layer 5 obtained from this coating liquid also contains particles. In order to obtain the average particle size of the particles contained in the surface protective layer 5, the diameters of a plurality of particles are actually measured, while observing a cross section of the layer, and the measured diameters are averaged. The value obtained in this way is substantially the same as the median diameter (D50) measured using a laser diffraction/scattering particle size analyzer. Therefore, the above range of the average particle size can also be interpreted as the range of average particle size of the particles contained in the surface protective layer 5.

The particles are preferred to be contained in the surface protective layer 5 in an amount of 3 parts by mass or more and 11 parts by mass or less, relative to 100 parts by mass of the ionizing radiation curable resin. The amount of particles added is preferred to be 4 parts by mass or more and 10 parts by mass or less, relative to 100 parts by mass of the resin. The expression 100 parts by mass of the resin refers to the mass parts of the solid content of the resin.

If the added amount of particles is in the above range, an especially high effect of uniformly producing wrinkles can be expected. If the added amount of particles is increased, the ratio Rdc/t tends to become small. For this reason, if the added amount of particles is excessively small or excessively large, the moist feel may be difficult to achieve. If the added amount of particles is large, particles are likely to shed from the surface protective layer 5, and it may become difficult to achieve high scratch resistance. If the added amount of particles is small, the effect of uniformly producing wrinkles may be small.

When curing the entire surface protective layer 5 using UV light, a photopolymerization initiator is required to be added to the surface protective layer 5. The photopolymerization initiator is not specifically limited, but examples thereof may include benzophenone-, acetophenone-, benzoin ether-, and thioxanthone-based photopolymerization initiators.

In order to impart required functions to the surface protective layer 5, additives such as antibacterial agents and antifungal agents may be further added. As other additives, a UV absorber and a photostabilizer may be added, as necessary. Generally, for example, benzotriazole-, benzoate-, benzophenone-, and triazine-based UV absorbers are added in any combination, and, for example, hindered amine-based photostabilizers are added in any combination.

Examples of the hindered amine-based photostabilizer include reaction products of octane with bis(1,2,2,6,6-pentamethyl-4-piperidyl)[[3,5-bis(1,1-dimethylethyl)-4-hydroxyphenyl]methyl]butylmalonate (typical example is Tinuvin 144 (product name) manufactured by BASF Corporation), Tinuvin 123 manufactured by BASF Corporation, or decanedioic acid bis(2,2,6,6-tetramethyl-1-(octyloxy)-4-piperidinyl)ester(1,1-dimethylethyl hydroperoxide).

In the case of adding a hindered amine-based photostabilizer to the surface protective layer 5, the added amount is preferred to be in the range of 0.05 parts by mass or more and 5 parts by mass or less, relative to 100 parts by mass of the ionizing radiation curable resin. The added amount of the hindered amine-based photostabilizer is more preferred to be in the range of 0.2 parts by mass or more and 3 parts by mass or less. If the added amount of the hindered amine-based photostabilizer is less than 0.05 parts by mass, stability of the resin to UV radiation may be poor. If the added amount is more than 5 parts by mass, bleed-out is more likely to occur. The surface protective layer 5 can be formed by applying light of 200 nm or less to cure and shrink the vicinity of the surface, for formation of a fine uneven shape. In this case, if the hindered amine-based photostabilizer is contained in an amount of more than 3 parts by mass, there is a risk that curing in the vicinity of the surface is inhibited. In order to satisfy both of low gloss and whether resistance, the hindered amine-based photostabilizer is preferred to be contained in an amount of 3 parts by mass or less.

The surface protective layer 5 is preferred to have a gloss of less than 10.0. The gloss of the surface protective layer 5 is more preferred to be 5.0 or less. The gloss refers to a measurement value measured at an incidence angle of 60 degrees using a gloss meter conforming to JIS Z 8741:1997.

<1.5> Primer layer

The primer layer 6 can be basically made of the same material as that of the pattern layer 3 described above. Considering that the primer layer 6 is applied to the rear surface of the decorative sheet 1 and taken up in a roll, an inorganic filler such as silica, alumina, magnesia, titanium oxide, and barium sulfate may be added to the primer layer 6 to prevent blocking and improve adhesion to the adhesive. Since the purpose is only to secure adhesion to the substrate B, the coating thickness of the primer layer 6 is preferred to be 0.1 $\mu$m or more and 3.0 $\mu$m or less. The primer layer 6 is required to be provided if the primer film layer 2 is made of a material such as an olefin-based material having an inactive surface; however, if the surface is active, the primer layer 6 is not necessary.

<2> Method of producing decorative sheet

For example, the decorative sheet 1 can be produced using the following method. To simplify, description related to the pattern layer 3, transparent resin layer 4, adhesive resin layer 4b, and primer layer 6 is omitted.

First, a coating film comprising a surface protective layer coating liquid is formed on one side of the primary film layer 2. As described in the section <1.4> Surface protective layer, the surface protective layer coating liquid contains an ionizing radiation curable resin and, as necessary, particles or additives. The coating film of the surface protective layer coating liquid can be formed by printing, for example.

Following the formation of the coating film of the surface protective layer coating liquid, a first irradiation step is performed. In the first irradiation step, the coating film is irradiated with light having a wavelength of 200 nm or less (hereinafter referred to as first radiation). The ionizing radiation curable resin contained in the surface protective layer coating liquid has a large absorption coefficient for the first radiation. For this reason, the first radiation incident on the coating film can only reach the depth of several tens to several hundreds of nm from the outermost surface of the film. Therefore, in the first irradiation step, the crosslinking reaction proceeds in the surface region of the coating film to form an extremely thin cured film, while in other regions, crosslinking reaction does not proceed and the coating film remains uncured.

The coating film that has undergone the first irradiation step has wrinkles on the surface corresponding to the ridge portions 5B. The present inventors consider the reason why the wrinkles appear on the surface of the coating film due to the first irradiation step to be as follows.

As described above, the first radiation can only reach the depth of several tens to several hundreds of nm from the outermost surface of the coating film. Specifically, the crosslinking reaction of the ionizing radiation curable resin occurs only in the surface region of the coating film, and the region several tens to several hundreds of nm apart from the outermost surface remains uncured, where molecules with high fluidity may be present. Such highly fluid molecules may swell the cured film, increasing the volume of the cured film. The cured film may buckle due to the in-plane compressive stress caused by volume increase in the in-plane direction, whereby wrinkles may appear on the surface of the coating film.

The first radiation can be extracted from excimer VUV light. The excimer VUV light can be produced from a lamp that uses a noble gas or a noble gas halide compound. When electrons having high energy are externally applied to a lamp in which a noble gas or a gas of a noble gas halide compound is sealed, a large quantity of discharge plasma (dielectric barrier discharge) is generated. The atoms in the discharged gas (noble gas) are excited by this plasma discharge and instantaneously brought into an excimer state. When returning from the excimer state to the ground state, light in the wavelength range specific to the excimer is emitted.

Any gas used in the conventional art can be used as the gas for the excimer lamp as long as the gas generates light with a wavelength of 200 nm or less. The gas may be a noble gas, such as Xe, Ar and Kr, or a mixed gas of a noble gas and a halogen gas, such as ArBr and ArF. The center wavelength of light emitted from the excimer lamp depends on the gas. For example, the wavelength may be approximately 172 nm (Xe), approximately 126 nm (Ar), approximately 146 nm (Kr), approximately 165 nm (ArBr), and approximately 193 nm (ArF).

Considering the magnitude of photon energy or the difference between the wavelength and the binding energy of the organics, the light source to be used is preferred to be a xenon lamp emitting excimer light with a center wavelength of 172 nm. Also, considering the cost of maintaining the equipment, availability of materials, etc., a xenon lamp is preferred to be used as a light source.

The first irradiation step is performed under an atmosphere where the oxygen concentration is low. Oxygen has a large absorption coefficient for light of 200 nm or less. Accordingly, for example, the first irradiation step is preferred to be performed under a nitrogen gas atmosphere. The oxygen concentration in the gas phase in the first irradiation step, i.e., the residual oxygen concentration in the reaction atmosphere, is preferred to be 2,000 ppm or less, and more preferred to be 1,000 ppm or less.

Furthermore, oxygen in the atmosphere inhibits radical polymerization. Therefore, the residual oxygen concentration in the reaction atmosphere affects the formation of wrinkles on the surface of the coating film. Therefore, if the residual oxygen concentration in the reaction atmosphere is changed, the surface conditions of the surface protective layer 5 may also change.

The integrated light intensity of the first radiation is preferred to be 0.5 mJ/cm$^2$ or more and 200 mJ/cm$^2$ or less, more preferred to be 1 mJ/cm$^2$ or more and 100 mJ/cm$^2$ or less, even more preferred to be 3 mJ/cm$^2$ or more and 50 mJ/cm$^2$ or less, and most preferred to be 5 mJ/cm$^2$ or more and 30 mJ/cm$^2$ or less. If the integrated light intensity is decreased, expansion of the cured film in the in-plane direction may be reduced. If the integrated light intensity is excessively increased, the surface conditions of the coating film may be deteriorated.

After completing the first irradiation step, a second irradiation step is performed. In the second irradiation step, the coating film is irradiated with second radiation to cure the entire coating film. Thus, a surface protective layer 5 is obtained.

The second radiation is ionizing radiation such as electron beams, or UV light having a longer wavelength compared to the first radiation. If UV light is used as the second radiation, the UV light should have a wavelength at which the ionizing radiation curable resin exhibits a small absorption coefficient.

The integrated light intensity of the second radiation is preferred to be 10 mJ/cm$^2$ or more and 500 mJ/cm$^2$ or less, more preferred to be 50 mJ/cm$^2$ or more and 400 mJ/cm$^2$ or less, and even more preferred to be 100 mJ/cm$^2$ or more and 300 mJ/cm$^2$ or less.

For example, the decorative sheet 1 can be produced using the following method. The decorative sheet 1 may be produced using other methods. For example, a method in which an original plate is formed using the method described for the surface protective layer 5, and a surface protective layer 5 having an uneven structure on the surface thereof is formed by transfer using the original plate, may be used.

<3> Effects and others

The decorative sheet 1 described referring to Figs. 1 to 4 includes the surface protective layer 5 having the surface conditions as described above. Such a decorative sheet 1 can provide a user with a moist feel when the user slides their fingers over the surface of the surface protective layer 5 while pressing the surface with fingers. Specifically, since the slope of the uneven shape on the surface of the surface protective layer 5 is relatively gentle, when the user touches the decorative sheet 1 with the above action, the contact area between the fingers and the convex surface can be gradually increased, while suppressing the push-in resistance small due to contact between the fingers and the surface. Thus, a skin feel as if the surface of the decorative sheet were sticking to the fingers can be obtained.

The texture providing the moist feel can present a feeling of comfort and warmth to anyone who touches the decorative sheet 1. Also, the texture providing the moist feel can impart the decorative sheet 1 with high-quality appearance. Accordingly, the decorative sheet 1, which presents a moist feel to the user, is suitable for modes of use where the user is frequently in direct contact with the sheet or where the user directly comes into contact with the sheet for a long time, e.g., a mode of use in table tops, chair arms, handrails on stairs and in corridors.

The surface protective layer 5 of the decorative sheet 1, which has the surface conditions as described above, can achieve a low gloss even when it does not contain a matting agent (matting additive). Matting agents reduce the oil repellency of layers formed of resin materials, and therefore surface protective layers 5 containing matting agents are easily stained with fingerprints. The surface protective layer 5, which does not contain a matting agent, is less likely to absorb oil, and therefore is less likely to be stained with fingerprints. The surface protective layer 5 having excellent oil repellency is less susceptible to oil stains and adsorption of contaminants. In addition, in the surface protective layer 5 containing no matting agent, particles of the matting agent do not shed when the surface thereof is scratched, and therefore the decorative sheet 1 including such a surface protective layer 5 is less likely to cause gloss changes or scratches. The decorative sheet 1 has excellent weather resistance and formability, in addition to excellent fingerprint resistance, contamination resistance, and scratch resistance.

The reasons why the surface protective layer 5 having the above surface conditions can be obtained through the above method are as follows.

Oxygen in the gas phase not only absorbs short-wavelength UV light, but also inhibits radical polymerization. The effect of oxygen in the gas phase on radical polymerization is greatest in portions of the coating film of the ionizing radiation curable resin adjacent to the gas phase, but the effect decreases as the distance from the surface of the coating film increases. Therefore, in the first irradiation step, the oxygen concentration in the gas phase is changed to change the relationship between the distance from the surface of the coating film and the progress of the crosslinking reaction.

The change of this relationship leads to a change in thickness of the cured film produced on the surface of the coating film in the first irradiation step, or change in expansion degree of the cured film in the in-plane direction with the progress of the crosslinking reaction. The thickness of the cured film or the expansion degree of the cured film in the in-plane direction is also affected by the integrated light intensity in the first radiation step. The thickness of the cured film or the expansion degree of the cured film in the in-plane direction affects the surface conditions of the surface protective layer.

Furthermore, the size and added amount of the particles in the coating film, and the thickness of the coating film also affect the formation of wrinkles.

Accordingly, a surface protective layer having desired surface conditions can be obtained by appropriately determining, for example, the composition of the ionizing radiation curable resin, the thickness of the coating film, the oxygen concentration in the gas phase in the first irradiation step, and the integrated light intensity in the first irradiation step.

Examples

Examples of the present invention will be described below.

<Example 1>

An olefin film with a thickness of 55 $\mu$m (manufactured by Riken Technos Corp.) was used as a primary film layer 2. One side of the primary film layer 2 was corona-treated, and pattern printing was performed for the corona-treated side to form a pattern layer 3. The pattern layer 3 was formed using an ink obtained by adding 0.5 parts by mass of a hindered amine-based photostabilizer (CHIMASSORB 944 manufactured by BASF Corp.) to a two-part type urethane ink (V180 manufactured by Toyo Ink Co., Ltd.), relative to the binder resin content of the urethane ink. The cut level difference Rdc of the surface of the pattern layer 3 was 0.4 $\mu$m. The cut level difference Rdc was measured using a surface roughness meter (SJ-310 manufactured by Mitutoyo) under measurement conditions where the cutoff value $\lambda$c was 2.5 mm, the cutoff value $\lambda$s was 8 $\mu$m, and the evaluation length was 12.5 mm. Measurements were made at 5 points in the direction perpendicular to the film-forming direction, and the average of the measurements was taken to be a measured value.

Next, a primer layer 6 was formed on the rear surface of the primary film layer 2. The primer layer 6 was formed by printing a two-part type urethane ink similar to that of the pattern layer 3.

Next, a surface protective layer coating liquid was applied to the pattern layer 3. The layer of the surface protective layer coating liquid had a thickness of 5 $\mu$m. The surface protective layer coating liquid used was prepared by adding the following additives (particles and photopolymerization initiator) to the following ionizing radiation curable resin.

Ionizing radiation curable resin

    Type: Trimethylolpropane EO-modified triacrylate (15 moles of EO added)
    Product name: SR9035 (manufactured by Sartomer)
    Formulation: 100 parts by mass

Particles

    Product Name: SYLYSIA 250N (manufactured by Fuji Silysia Chemical Ltd.)
    Particle size: 5 $\mu$m
    Formulation: 5 parts by mass

Photopolymerization initiator

    Product name: Omnirad 184 (manufactured by IGM Resins B.V.)
    Formulation: 3 parts by mass

After that, the first irradiation step was performed. Specifically, using an Xe excimer lamp, UV light having a wavelength of 172 nm was applied to the surface of the coating film formed of the surface protective layer coating liquid, in a nitrogen gas atmosphere at atmospheric pressure in which the oxygen concentration was 100 ppm, so that the integrated light intensity would be 30 mJ/cm$^2$. Thus, wrinkles were produced on the surface of the coating film.

Subsequently, the second irradiation step was performed. Specifically, the coating film was irradiated with UV light using a high pressure mercury lamp at 200 mJ/cm$^2$ to cure the entirety of the film, thereby forming a surface protective layer 5.

In this way, a decorative sheet 1 with a total thickness of 60 μm was obtained.

<Example 2>

A decorative sheet with a total thickness of 60 μm was obtained in the same manner as in Example 1, except that the ionizing radiation curable resin of Example 1 was replaced by the following resin.

Ionizing radiation curable resin

Type: Trimethylolpropane EO-modified triacrylate (15 moles of EO added)
Product name: SR9035 (manufactured by Sartomer)
Formulation: 75 parts by mass
Product name: Dipentaerythritol hexaacrylate
Formulation: 25 parts by mass

<Example 3>

A decorative sheet with a total thickness of 60 μm was obtained in the same manner as in Example 1, except that the ionizing radiation curable resin of Example 1 was replaced by the following resin.

Ionizing radiation curable resin

Type: Trimethylolpropane EO-modified triacrylate (15 moles of EO added)
Product name: SR9035 (manufactured by Sartomer)
Formulation: 50 parts by mass
Product name: Dipentaerythritol hexaacrylate
Formulation: 50 parts by mass

<Comparative Example 1>

A decorative sheet with a total thickness of 60 μm was obtained in the same manner as in Example 1, except that the ionizing radiation curable resin of Example 1 was replaced by the following resin.

Ionizing radiation curable resin

Type: Trimethylolpropane EO-modified triacrylate (15 moles of EO added)
Product name: SR9035 (manufactured by Sartomer)
Formulation: 25 parts by mass
Product name: Dipentaerythritol hexaacrylate
Formulation: 75 parts by mass

<Comparative Example 2>

A decorative sheet with a total thickness of 60 μm was obtained in the same manner as in Example 1, except that the ionizing radiation curable resin of Example 1 was replaced by the following resin.

Ionizing radiation curable resin

Product name: Dipentaerythritol hexaacrylate
Formulation: 100 parts by mass

<Example 4>

A sheet formed of a primer layer 6, a primer film layer 2, and a pattern layer 3 was prepared in the same manner as in Example 1. Subsequently, a mixture obtained by mixing 0.5 parts by mass of a hindered amine-based photostabilizer (CHIMASSORB 944 manufactured by BASF Corp.) and 0.5 parts by mass of benzotriazole-based UV absorber (Tinuvin 328 manufactured by BASF Corp.), relative to 100 parts by mass of crystalline polypropylene resin (pentad fraction 97.8%, molecular weight distribution 2.3, MFR 18g/10min), was coextruded with a polyethylene-based adhesion-enhancing resin using a melt extruder to prepare a transparent resin layer 4 with a thickness of 60 $\mu$m and an adhesive resin layer 4b with a thickness of 10 $\mu$m. Next, a dry-laminating adhesive (Takelac A540 manufactured by Mitsui Chemicals, inc.; coating amount 2 g/m$^2$) was applied to the surface of the pattern layer 3. Subsequently, the pattern layer 3 of the sheet to which the adhesive had been applied was bonded to the transparent resin layer 4 via the prepared adhesive resin layer 4b, using an extrusion lamination method. Furthermore, the transparent resin layer 4-side surface of the sheet formed as a result of the bonding was pressed using an embossing die roll to provide an embossed pattern 4a. The resulting cut level difference Rdc of the surface of the transparent resin layer 4 was 0.5 $\mu$m.

Next, a surface protective layer coating liquid was applied to the transparent resin layer 4. The layer of the surface protective layer coating liquid had a thickness of 5 $\mu$m. The surface protective layer coating liquid used was prepared by adding the following additives (particles and photopolymerization initiator) to the following ionizing radiation curable resin.

Ionizing radiation curable resin

    Type: Trimethylolpropane EO-modified triacrylate (15 moles of EO added)
    Product name: SR9035 (manufactured by Sartomer)
    Formulation: 100 parts by mass

Particles

    Product Name: SYLYSIA 250N (manufactured by Fuji Silysia Chemical Ltd.)
    Particle size: 5 $\mu$m
    Formulation: 5 parts by mass

Photopolymerization initiator

    Product name: Omnirad 184 (manufactured by IGM Resins B.V.)
    Formulation: 3 parts by mass

After that, the first irradiation step was performed. Specifically, using an Xe excimer lamp, UV light having a wavelength of 172 nm was applied to the surface of the coating film formed of the surface protective layer coating liquid, in a nitrogen gas atmosphere at atmospheric pressure in which the oxygen concentration was 100 ppm, so that the integrated light intensity would be 30 mJ/cm$^2$. Thus, wrinkles were produced on the surface of the coating film.

Subsequently, the second irradiation step was performed. Specifically, the coating film was irradiated with UV light using a high pressure mercury lamp at 200 mJ/cm$^2$ to cure the entirety of the film, thereby forming a surface protective layer 5.

In this way, a decorative sheet with a total thickness of 130 $\mu$m was obtained.

<Example 5>

A decorative sheet with a total thickness of 130 $\mu$m was obtained in the same manner as in Example 4, except that a die roll different from that of Example 4 was used for pressing when imparting the embossed pattern 4a to the transparent resin layer 4 to change the cut level difference Rdc of the surface of the transparent resin layer 4. In Example 5, the cut level difference Rdc of the surface of the transparent resin layer 4 was 2.6 $\mu$m.

<Example 6>

A decorative sheet with a total thickness of 130 $\mu$m was obtained in the same manner as in Example 4, except that a die roll different from that of Example 4 was used for pressing when imparting the embossed pattern 4a to the transparent resin layer 4 to change the cut level difference Rdc of the surface of the transparent resin layer 4. In Example 6, the cut level difference Rdc of the surface of the transparent resin layer 4 was 3.2 $\mu$m.

<Comparative Example 3>

A decorative sheet with a total thickness of 130 $\mu$m was obtained in the same manner as in Example 4, except that a die roll different from that of Example 4 was used for pressing when imparting the embossed pattern 4a to the transparent resin layer 4 to change the cut level difference Rdc of the surface of the transparent resin layer 4. In Comparative Example 3, the cut level difference Rdc of the surface of the transparent resin layer 4 was 3.5 $\mu$m.

<Comparative Example 4>

A decorative sheet with a total thickness of 130 $\mu$m was obtained in the same manner as in Example 4, except that the second irradiation step was performed without performing the first irradiation step of Example 4.

<Example 7>

A decorative sheet with a total thickness of 130 $\mu$m was obtained in the same manner as in Example 4, except that the ionizing radiation curable resin of Example 4 was replaced by the following resin.

Ionizing radiation curable resin

    Type: Trimethylolpropane EO-modified triacrylate (20 moles of EO added)
    Product name: NK Ester AT-20E (manufactured by Shin-Nakamura Chemical Co., Ltd.)
    Formulation: 100 parts by mass

<Example 8>

A decorative sheet with a total thickness of 130 $\mu$m was obtained in the same manner as in Example 4, except that the ionizing radiation curable resin of Example 4 was replaced by the following resin.

Ionizing radiation curable resin

    Type: Trimethylolpropane EO-modified triacrylate (9 moles of EO added)
    Product name: SR502 (manufactured by Sartomer)
    Formulation: 100 parts by mass

<Example 9>

A decorative sheet with a total thickness of 130 $\mu$m was obtained in the same manner as in Example 4, except that the ionizing radiation curable resin of Example 4 was replaced by the following resin.

Ionizing radiation curable resin

    Type: Trimethylolpropane EO-modified triacrylate (6 moles of EO added)
    Product name: Miramer M3160 (manufactured by Miwon)
    Formulation: 100 parts by mass

<Example 10>

A decorative sheet with a total thickness of 130 μm was obtained in the same manner as in Example 4, except that the ionizing radiation curable resin of Example 4 was replaced by the following resin.

Ionizing radiation curable resin

Type: Trimethylolpropane EO-modified triacrylate (3 moles of EO added)
Product name: Miramer M3130 (manufactured by Miwon)
Formulation: 100 parts by mass

<Comparative Example 5>

A decorative sheet with a total thickness of 130 μm was obtained in the same manner as in Example 4, except that the ionizing radiation curable resin of Example 4 was replaced by the following resin.

Ionizing radiation curable resin

Type: Trimethylolpropane triacrylate
Product name: NK Ester A-TMPT (manufactured by Shin-Nakamura Chemical Co., Ltd.)
Formulation: 100 parts by mass

<Example 11>

A decorative sheet with a total thickness of 130 μm was obtained in the same manner as in Example 4, except that the particles (product name: SYLYSIA 250N) of Example 4 were not added.

<Comparative Example 6>

A decorative sheet with a total thickness of 130 μm was obtained in the same manner as in Example 5, except that the particles (product name: SYLYSIA 250N) of Example 5 were not added.

<Comparative Example 7>

A decorative sheet with a total thickness of 130 μm was obtained in the same manner as in Example 6, except that the particles (product name: SYLYSIA 250N) of Example 6 were not added.

<Comparative Example 8>

A decorative sheet with a total thickness of 130 μm was obtained in the same manner as in Example 7, except that the particles (product name: SYLYSIA 250N) of Example 7 were not added.

<Example 12>

A decorative sheet with a total thickness of 130 μm was obtained in the same manner as in Example 8, except that the particles (product name: SYLYSIA 250N) of Example 8 were not added.

<Example 13>

A decorative sheet with a total thickness of 130 μm was obtained in the same manner as in Example 9, except that the particles (product name: SYLYSIA 250N) of Example 9 were not added.

<Example 14>

A decorative sheet with a total thickness of 130 μm was obtained in the same manner as in Example 10, except that the particles (product name: SYLYSIA 250N) of Example 10 were not added.

<Comparative Example 9>

A decorative sheet with a total thickness of 130 μm was obtained in the same manner as in Example 4, except that the thickness of the layer of the surface protective layer coating liquid of Example 4 was changed to 1 μm.

<Example 15>

A decorative sheet with a total thickness of 130 μm was obtained in the same manner as in Example 4, except that the thickness of the layer of the surface protective layer coating liquid of Example 4 was changed to 2 μm.

<Example 16>

A decorative sheet with a total thickness of 130 μm was obtained in the same manner as in Example 4, except that the thickness of the layer of the surface protective layer coating liquid of Example 4 was changed to 10 μm.

<Example 17>

A decorative sheet with a total thickness of 130 μm was obtained in the same manner as in Example 4, except that the thickness of the layer of the surface protective layer coating liquid of Example 4 was changed to 18 μm.

<Comparative Example 10>

A decorative sheet with a total thickness of 130 μm was obtained in the same manner as in Example 4, except that the thickness of the layer of the surface protective layer coating liquid of Example 4 was changed to 20 μm.

<Example 18>

A decorative sheet with a total thickness of 130 μm was obtained in the same manner as in Example 4, except that the particles of Example 4 were changed to the following particles.

Particles

Product Name: SYLYSIA 310P (manufactured by Fuji Silysia Chemical Ltd.)
Particle size: 2 μm

<Example 19>

A decorative sheet with a total thickness of 130 μm was obtained in the same manner as in Example 4, except that the particles of Example 4 were changed to the following particles.

Particles

Product Name: SYLYSIA 420 (manufactured by Fuji Silysia Chemical Ltd.)
Particle size: 3 μm

<Example 20>

A decorative sheet with a total thickness of 130 μm was obtained in the same manner as in Example 4, except that the particles of Example 4 were changed to the following particles.

Particles

Product Name: SYLYSIA 450 (manufactured by Fuji Silysia Chemical Ltd.)
Particle size: 8 μm

<Example 21>

A decorative sheet with a total thickness of 130 μm was obtained in the same manner as in Example 4, except that the particles of Example 4 were changed to the following particles.

Particles

Product Name: SYLYSIA 780 (manufactured by Fuji Silysia Chemical Ltd.)
Particle size: 11 μm

<Example 22>

A decorative sheet with a total thickness of 130 μm was obtained in the same manner as in Example 4, except that the particles of Example 4 were changed to the following particles.

Particles

Product name: sicastar 43-00-154 (manufactured by COREFRONT)
Particle size: 14 μm

<Example 23>

A decorative sheet with a total thickness of 130 μm was obtained in the same manner as in Example 4, except that the formulation of the particles of Example 4 was changed to the following formulation.

Particles

Product Name: SYLYSIA 250N (manufactured by Fuji Silysia Chemical Ltd.)
Particle size: 5 μm
Formulation: 2 parts by mass

<Example 24>

A decorative sheet with a total thickness of 130 μm was obtained in the same manner as in Example 4, except that the formulation of the particles of Example 4 was changed to the following formulation.

Particles

Product Name: SYLYSIA 250N (manufactured by Fuji Silysia Chemical Ltd.)
Particle size: 5 μm
Formulation: 3 parts by mass

<Example 25>

A decorative sheet with a total thickness of 130 $\mu$m was obtained in the same manner as in Example 4, except that the formulation of the particles of Example 4 was changed to the following formulation.

Particles

Product Name: SYLYSIA 250N (manufactured by Fuji Silysia Chemical Ltd.)
Particle size: 5 $\mu$m
Formulation: 11 parts by mass

<Example 26>

A decorative sheet with a total thickness of 130 $\mu$m was obtained in the same manner as in Example 4, except that the formulation of the particles of Example 4 was changed to the following formulation.

Particles

Product Name: SYLYSIA 250N (manufactured by Fuji Silysia Chemical Ltd.)
Particle size: 5 $\mu$m
Formulation: 12 parts by mass

<Example 27>

A decorative sheet with a total thickness of 130 $\mu$m was obtained in the same manner as in Example 4, except that the ionizing radiation curable resin of Example 4 was replaced by the following resin.

Ionizing radiation curable resin

Type: Ethoxylated pentaerythritol tetraacrylate (20 moles of EO added)

<Example 28>

A decorative sheet with a total thickness of 130 $\mu$m was obtained in the same manner as in Example 4, except that the ionizing radiation curable resin of Example 4 was replaced by the following resin.

Ionizing radiation curable resin

Type: Ethoxylated pentaerythritol tetraacrylate (35 moles of EO added)
Product name: NK Ester ATM-35E (manufactured by Shin-Nakamura Chemical Co., Ltd.)

<Comparative Example 11>

A decorative sheet with a total thickness of 130 $\mu$m was obtained in the same manner as in Example 4, except that the ionizing radiation curable resin of Example 4 was replaced by the following resin.

Ionizing radiation curable resin

Type: Ethylene glycol diacrylate (9 moles of EO added)
Product name: Light Acrylate 9EG-A (manufactured by Kyoeisha Chemical Co., Ltd.)

<Comparative Example 12>

A decorative sheet with a total thickness of 130 μm was obtained in the same manner as in Example 4, except that the ionizing radiation curable resin of Example 4 was replaced by the following resin.

Ionizing radiation curable resin

Type: Ethoxylated dipentaerythritol hexaacrylate (12 moles of EO added)
Product name: NK Ester A-DPH-12E (manufactured by Shin-Nakamura Chemical Co., Ltd.)

<Comparative Example 13>

A decorative sheet with a total thickness of 130 μm was obtained in the same manner as in Example 4, except that the ionizing radiation curable resin of Example 4 was replaced by the following resin.

Ionizing radiation curable resin

Type: Pentaerythritol tetraacrylate
Product name: NK Ester A-TMMT (manufactured by Shin-Nakamura Chemical Co., Ltd.)

<Example 29>

A decorative sheet with a total thickness of 130 μm was obtained in the same manner as in Example 4, except that the ionizing radiation curable resin of Example 4 was replaced by the following resin.

Ionizing radiation curable resin

Type: Trimethylolpropane PO-modified triacrylate (6 moles of PO added)
Product name: NK Ester A-TMPT-6PO (manufactured by Shin-Nakamura Chemical Co., Ltd.)

<Example 30>

A decorative sheet with a total thickness of 130 μm was obtained in the same manner as in Example 4, except that the ionizing radiation curable resin of Example 4 was replaced by the following resin.

Ionizing radiation curable resin

Type: Caprolactone-modified tris-(2-acryloxyethyl)isocyanurate (3 moles of caprolactone added)
Product name: NK Ester A-9300-3CL (manufactured by Shin-Nakamura Chemical Co., Ltd.)

<Example 31>

No photopolymerization initiator was added to the ionizing radiation curable resin of Example 4. The coating film was irradiated with ionizing radiation in the second irradiation step and the entirety of the coating film was cured to thereby form a surface protective layer 5. Other than this, a decorative sheet with a total thickness of 130 μm was obtained in the same manner as in Example 4.

<Example 32>

A decorative sheet with a total thickness of 130 μm was obtained in the same manner as in Example 4, except that the following photostabilizer was added to the ionizing radiation curable resin of Example 4.

Photostabilizer

Product name: Tinuvin 123 (manufactured by BASF Corporation)
Formulation: 1 part by mass

<Example 33>

A decorative sheet with a total thickness of 130 $\mu$m was obtained in the same manner as in Example 4, except that the following photostabilizer was added to the ionizing radiation curable resin of Example 4.

Photostabilizer

Product name: Tinuvin 123 (manufactured by BASF Corporation)
Formulation: 3 parts by mass

<Example 34>

A decorative sheet with a total thickness of 130 $\mu$m was obtained in the same manner as in Example 4, except that the following photostabilizer was added to the ionizing radiation curable resin of Example 4.

Photostabilizer

Product name: Tinuvin 123 (manufactured by BASF Corporation)
Formulation: 5 parts by mass

<Evaluation>

The decorative sheets were individually evaluated as follows.

(1) Thickness of surface protective layer 5

The thickness of the surface protective layer 5 was measured as follows. Each decorative sheet was surrounded with a resin such as a cold-curing epoxy resin or UV curable resin for sufficient curing, followed by cutting so that a section of the decorative sheet appeared, which was then subjected to mechanical polishing to obtain a measurement surface. Subsequently, the thickness of the surface protective layer 5 was measured using a scanning electron microscope SIGMA 500 manufactured by Carl Zeiss Microscopy GmbH. Measurements were made at 25 arbitrary points, and a measured value obtained by averaging the 25 points was defined to be the thickness t of the surface protective layer. The measurements were performed under conditions of: acceleration voltage of 0.5 keV (low acceleration voltage), imaging mode of SE2 mode, and magnification of 2,000 times. No sputtering was performed on the measurement samples. The thickness t of the surface protective layer was equal to the thickness of the coating film formed of the surface protective layer coating liquid. The total thickness of the decorative sheet of each of Examples 1 to 3 and Comparative Examples 1 and 2 was equal to the sum of the thickness of the surface protective layer 5 and the thickness of the primary film layer 2. The total thickness of the decorative sheet of each of Examples 4 to 34 and Comparative Examples 3 to 13 was equal to the sum of the thickness of the surface protective layer 5, the thickness of the transparent resin layer 4, the thickness of the adhesive resin layer 4b, and the thickness of the primary film layer 2.

(2) Surface conditions

For surface conditions, uniformity of the surface was evaluated visually.
The evaluation criteria were as follows.

Good: The surface was uniform.

Fair: Part of the surface was uneven.

Poor: The entire surface was uneven.

(3) Gloss

60-degree gloss was measured using a Rhopoint IQ (manufactured by Konica Minolta Co., Ltd.). The 60° gloss in the following Tables refers to this 60-degree gloss.

(4) Fourier infrared spectrometry

For Fourier infrared spectrometry, a Fourier infrared spectrometry device (FT/IR-6300) manufactured by JASCO Corporation, and a single reflection type (incident angle 45°) ATR unit (ATR PRO470-H) with a diamond prism of 2-mm$\varphi$ sample contact area were used.
The measurement conditions were as follows.

Measurement wavenumber range: 4,000 cm$^{-1}$ to 400 cm$^{-1}$
Resolution: 4.0 cm$^{-1}$
Light source: Standard light source
Detector: TGS
Sample chamber: Standard
Sensitivity (gain): 32x
Aperture diameter: 7.1 mm
Interferometer measurement (scan speed): 2 mm/sec
Filter: 10,000 Hz
Beam splitter: Ge/KBr
Apodization function: Cosine
Zero filling: On

The atmosphere inside the optical system was replaced with nitrogen, and an absorption spectrum was obtained by integrating 160 times. It should be noted that a background measurement had been performed prior to the absorption spectrum measurement of each sample, under the same conditions as those for measuring the sample, except that nothing was brought into contact with the diamond prism and that the number of times of integration was 320.
The absorption spectrum obtained was subjected to a penetration depth-type ATR correction using a Spectra Manager Version 2 manufactured by JASCO Corporation. After that, a value of the ratio $I_{1095}/I_{1725}$ was calculated. $I_{1095}$ refers to a maximum absorbance of a peak detected within the wavenumber range of $1095 \pm 10$ cm$^{-1}$, and $I_{1725}$ refers to a maximum absorbance of a peak detected within the wavenumber range of $1725 \pm 10$ cm$^{-1}$.

(5) Fingerprint resistance

To evaluate fingerprint resistance, fingerprint wipeability was evaluated. 60° gloss was measured for the surface of each of the decorative sheets, and the measured gloss was taken to be an initial gloss. Subsequently, a fingerprint resistance evaluation liquid was adhered to the outermost layer of each decorative sheet, and then the fingerprint resistance evaluation liquid adhered to the surface was wiped off. After that, the 60° gloss at the portion from which the fingerprint resistance evaluation liquid had been wiped off was measured and the measured value was taken to be a gloss after wiping. A higher fatty acid was used here as the fingerprint resistance evaluation liquid.
A fingerprint wiping rate was calculated from the following formula.

$$\text{Fingerprint wiping rate (\%)} = (\text{gloss after wiping / initial gloss}) \times 100$$

The evaluation criteria were as follows.

AA: Wiping rate was 70% or more and less than 250%.
A: Wiping rate was 50% or more and less than 70%, or 250% or more and less than 300%.
B: Wiping rate was less than 50%, or 300% or more.

(6) Contamination resistance

The contamination A test stipulated in the Japanese Agricultural Standards (JAS) was performed to evaluate contamination resistance. Specifically, lines each having a width of 10 mm were drawn on the surface protective layer of each decorative sheet using blue ink, black quick-drying ink, and red crayon, respectively, and left to stand for 4 hours. After that, the blue ink, black quick-drying ink, and red crayon were wiped off using ethanol-soaked cloth to evaluate ink contamination resistance.
The evaluation criteria were as follows.

AA: The colored lines could all be easily wiped off.
A: Part of the colored lines could be wiped off but part of them remained as stains.
B: None of the colored lines could be wiped off.

(7) Scratch resistance: steel wool rubbing test

To evaluate scratch resistance, each of the obtained decorative sheets was bonded to a wood substrate B using a urethane adhesive, and subjected to steel wool rubbing testing. Specifically, with a load of 100 g imposed, steel wool was reciprocated 20 times on the decorative sheet, and scratches and gloss changes caused on the surface of the sheet were visually examined.
The evaluation criteria were as follows.

AA: No scratches or gloss changes were observed on the surface.
A: Slight scratches or gloss changes were observed on the surface.
B: Significant scratches or gloss changes were observed on the surface.

(8) Formability

For formability evaluation, bending formability test was performed. In the bending formability test, each decorative sheet was attached to a wood substrate, and a V-shaped groove was formed from the other side of the substrate to the depth of the boundary where the sheet was attached to the substrate, so that the sheet on the opposite side was not scratched. Next, to evaluate bending formability, the substrate was bent to 90 degrees along the V-shaped groove so that the surface of the decorative sheet would be mountain-folded, and the bent portion of the surface of the decorative sheet was observed using an optical microscope to examine the occurrence of blushing, cracking, etc.
The evaluation criteria were as follows. If the evaluation was A or above, the sheet was determined to have no practical problem.

AA: No blushing, cracking, etc. were observed.
A: Blushing was observed partly.
B: Blushing was observed on the entire surface, or cracking was observed partly.

(9) Weather resistance: Super UV tester

The appearance of each decorative sheet was visually evaluated after an accelerated weathering test, according to the following criteria. The accelerated weathering test was performed using an EYE Super UV Tester (SUV-W161; Iwasaki Electric Co., Ltd.) at a black panel temperature of 63°C and an illuminance of 65 mW/cm$^2$ over a period of 30 cycles (720 hours), with each cycle set to (20 hours of UV irradiation + 4 hours of condensation), and then the appearance of each decorative sheet subjected to the test was visually evaluated.
The evaluation criteria were as follows.

AA: No appearance change was observed in the decorative sheet.
A: Blushing was observed in the decorative sheet.
B: Cracking was observed in the decorative sheet.

(10) Skin feel

Skin feel was evaluated using the following method.
First, advance preparations were made to ensure that the evaluation criteria were consistent between evaluators. Specifically, 3 standard specimens with different surface conditions were prepared. Next, each of 5 blindfold evaluators was asked to run their fingers over the surface of each standard specimen while pressing the surface with fingers, and then to classify the skin feel into one of the following three groups.

First group: Push-in resistance was barely felt, but, in addition to a smooth feel, a skin feel as if the surface of the decorative sheet were sticking to the fingers was felt, and overall, the impression of a smooth feel was strong. In other words, a smooth feel was obtained.

Second group: Push-in resistance was barely felt, but, a skin feel as if the surface of the decorative sheet were sticking to the fingers was felt. However, there was no impression of a smooth feel. In other words, a moist feel was obtained.

Third group: Push-in resistance was felt, and the presence of unevenness was felt. In other words, a rough feel was obtained.

The above procedure was repeated until the evaluations of each evaluator coincided three or more times in succession and the evaluation results between the evaluators coincided three times in succession.

Next, each of the blindfold evaluators was asked to run their fingers over the surface of the surface protective layer while pressing the surface with fingers, and then to classify the sensation of touch into one of the above three groups. Then, this procedure was repeated until the evaluations of each evaluator coincided three or more times in succession and the evaluation results between the evaluators coincided three times in succession. Based on the results, skin feel was evaluated according to the following criteria.

A (smooth): First group
B (moist): Second group
C (rough): Third group

The following tables show the evaluation results. In the tables, if skin feel was evaluated as A (smooth), it was indicated as Y in the column of A (smooth), if skin feel was evaluated as B (moist), it was indicated as Y in the column of B (moist), and if skin feel was evaluated as C (rough), it was indicated as Y in the column of C (rough).

(11) Cut level difference Rdc of transparent resin layer, and cut level difference Rdc of surface protective layer and ratio Rdc/t

The cut level difference Rdc of the transparent resin layer was calculated prior to formation of the surface protective layer, as described in the detailed description. The cut level difference Rdc of the surface protective layer and the ratio Rdc/t were calculated after formation of the decorative sheet, as described in the detailed description.

[Table 1]

| | Material formulation | | | | | | | | | | | | | |
| --- | --- | --- | --- | --- | --- | --- | --- | --- | --- | --- | --- | --- | --- | --- |
| | Transparent resin layer | | | Cut level difference before forming surface protective layer | Surface protective layer | | | | | | | | | |
| | | Additive | | | | | | Acrylate resin 1 | | | | Acrylate resin 2 | | |
| | Thickness (μm) | UV absorber | Photostabilizer | | Thickness (μm) | Added amount (mass parts) | Number of functional groups | Repeating structure | | Added amount (mass parts) | Number of functional groups | Repeating structure | | |
| | | Added amount (mass parts) | Added amount (mass parts) | Rdc (μm) | | | | Structure | Number of repeat units | | | Structure | Number of repeat units | |
| Ex. 1 | None | - | - | 0.4 | 5 | 100 | 3 | $C_2H_4O$ | 15 | - | - | - | - | |
| Ex. 2 | None | - | - | 0.4 | 5 | 75 | 3 | $C_2H_4O$ | 15 | 25 | 6 | None | - | |
| Ex. 3 | None | - | - | 0.4 | 5 | 50 | 3 | $C_2H_4O$ | 15 | 50 | 6 | None | - | |
| Comp. Ex. 1 | None | - | - | 0.4 | 5 | 75 | 6 | None | - | 25 | 3 | $C_2H_4O$ | 15 | |
| Comp. Ex. 2 | None | - | - | 0.4 | 5 | 100 | 6 | None | - | - | - | - | - | |
| Ex. 4 | 70 | 0.5 | 0.5 | 0.5 | 5 | 100 | 3 | $C_2H_4O$ | 15 | - | - | - | - | |
| Ex. 5 | 70 | 0.5 | 0.5 | 2.6 | 5 | 100 | 3 | $C_2H_4O$ | 15 | - | - | - | - | |
| Ex. 6 | 70 | 0.5 | 0.5 | 3.2 | 5 | 100 | 3 | $C_2H_4O$ | 15 | - | - | - | - | |
| Comp. Ex. 3 | 70 | 0.5 | 0.5 | 3.5 | 5 | 100 | 3 | $C_2H_4O$ | 15 | - | - | - | - | |
| Comp. Ex. 4 | 70 | 0.5 | 0.5 | 0.5 | 5 | 100 | 3 | $C_2H_4O$ | 15 | - | - | - | - | |
| Ex. 7 | 70 | 0.5 | 0.5 | 0.5 | 5 | 100 | 3 | $C_2H_4O$ | 20 | - | - | - | - | |
| Ex. 8 | 70 | 0.5 | 0.5 | 0.5 | 5 | 100 | 3 | $C_2H_4O$ | 9 | - | - | - | - | |
| Ex. 9 | 70 | 0.5 | 0.5 | 0.5 | 5 | 100 | 3 | $C_2H_4O$ | 6 | - | - | - | - | |
| Ex. 10 | 70 | 0.5 | 0.5 | 0.5 | 5 | 100 | 3 | $C_2H_4O$ | 3 | - | - | - | - | |

EP 4 656 373 A1

| | Material formulation | | | | | | | | | | | | |
| | Transparent resin layer | | | Cut level difference before forming surface protective layer | Surface protective layer | | | | | | | | |
| | | Additive | | | | | | Acrylate resin 1 | | | | Acrylate resin 2 | |
| | Thickness ($\mu$m) | UV absorber | Photostabilizer | | Thickness ($\mu$m) | Added amount (mass parts) | Number of functional groups | Repeating structure | | Added amount (mass parts) | Number of functional groups | Repeating structure | |
| | | Added amount (mass parts) | Added amount (mass parts) | Rdc ($\mu$m) | | | | Structure | Number of repeat units | | | Structure | Number of repeat units |
| Comp. Ex. 5 | 70 | 0.5 | 0.5 | 0.5 | 5 | 100 | 3 | None | - | - | - | - | - |

[Table 2]

| | Material formulation | | | | | First irradiation step performed? | Second irradiation step |
|---|---|---|---|---|---|---|---|
| | Surface protective layer | | | | | | |
| | Additive | | | | | | |
| | Particles | | Photopolymerization initiator | Photostabilizer | | | |
| | Particle size (μm) | Added amount (mass parts) | Added amount (mass parts) | Added amount (mass parts) | | | |
| Ex. 1 | 5 | 5 | 3 | 0 | | Yes | UV light |
| Ex. 2 | 5 | 5 | 3 | 0 | | Yes | UV light |
| Ex. 3 | 5 | 5 | 3 | 0 | | Yes | UV light |
| Comp. Ex. 1 | 5 | 5 | 3 | 0 | | Yes | UV light |
| Comp. Ex. 2 | 5 | 5 | 3 | 0 | | Yes | UV light |
| Ex. 4 | 5 | 5 | 3 | 0 | | Yes | UV light |
| Ex. 5 | 5 | 5 | 3 | 0 | | Yes | UV light |
| Ex. 6 | 5 | 5 | 3 | 0 | | Yes | UV light |
| Comp. Ex. 3 | 5 | 5 | 3 | 0 | | Yes | UV light |
| Comp. Ex. 4 | 5 | 5 | 3 | 0 | | No | UV light |
| Ex. 7 | 5 | 5 | 3 | 0 | | Yes | UV light |
| Ex. 8 | 5 | 5 | 3 | 0 | | Yes | UV light |
| Ex. 9 | 5 | 5 | 3 | 0 | | Yes | UV light |
| Ex. 10 | 5 | 5 | 3 | 0 | | Yes | UV light |
| Comp. Ex. 5 | 5 | 5 | 3 | 0 | | Yes | UV light |

[Table 3]

| | Evaluation for physical properties | | | | | | |
|---|---|---|---|---|---|---|---|
| | Surface configuration | Total thickness (μm) | Surface condition | Cut level difference | | 60° gloss | Ratio $I_{1095}/I_{1725}$ |
| | | | | Rdc (μm) | Rdc/t | | |
| Ex. 1 | Ridged | 60 | Good | 1.25 | 0.25 | 1.5 | 1.26 |
| Ex. 2 | Ridged | 60 | Good | 1.00 | 0.20 | 2.8 | 1.09 |
| Ex. 3 | Ridged | 60 | Good | 0.85 | 0.17 | 4.4 | 0.93 |
| Comp. Ex. 1 | Ridged | 60 | Good | 0.70 | 0.14 | 15 | 0.76 |
| Comp. Ex. 2 | Ridged | 60 | Good | 0.55 | 0.11 | 91 | 0.60 |
| Ex. 4 | Ridged | 130 | Good | 1.20 | 0.24 | 1.5 | 1.26 |
| Ex. 5 | Ridged | 130 | Good | 1.45 | 0.29 | 1.5 | 1.26 |
| Ex. 6 | Ridged | 130 | Good | 1.80 | 0.36 | 1.5 | 1.26 |
| Comp. Ex. 3 | Ridged | 130 | Good | 2.25 | 0.45 | 1.5 | 1.26 |
| Comp. Ex. 4 | Uneven due to particles | 130 | Good | 0.55 | 0.11 | 47 | 1.26 |
| Ex. 7 | Ridged | 130 | Good | 1.35 | 0.27 | 1.3 | 1.48 |
| Ex. 8 | Ridged | 130 | Good | 1.15 | 0.23 | 1.8 | 0.99 |
| Ex. 9 | Ridged | 130 | Good | 1.00 | 0.20 | 2.1 | 0.86 |

(continued)

| | Evaluation for physical properties | | | | | | |
|---|---|---|---|---|---|---|---|
| | Surface configuration | Total thickness (μm) | Surface condition | Cut level difference | | 60° gloss | Ratio $I_{1095}/I_{1725}$ |
| | | | | Rdc (μm) | Rdc/t | | |
| Ex. 10 | Ridged | 130 | Good | 0.85 | 0.17 | 2.5 | 0.73 |
| Comp. Ex. 5 | Ridged | 130 | Good | 0.70 | 0.14 | 18 | 0.60 |

[Table 4]

| | Evaluation for physical properties | | | | | Skin feel | | |
|---|---|---|---|---|---|---|---|---|
| | Fingerprint resistance | Contamination resistance | Scratch resistance | Formability | Weather resistance | A | B | C |
| | | Contamination A test | Steel | Bending formability | Super UV | Smooth | Moist | Rough |
| Ex. 1 | AA | AA | A | A | A | | Y | |
| Ex. 2 | AA | AA | A | A | A | | Y | |
| Ex. 3 | AA | AA | A | A | A | | Y | |
| Comp. Ex. 1 | A | AA | AA | A | A | Y | | |
| Comp. Ex. 2 | A | AA | AA | A | A | Y | | |
| Ex. 4 | AA | AA | AA | AA | AA | | Y | |
| Ex. 5 | AA | AA | AA | AA | AA | | Y | |
| Ex. 6 | AA | AA | AA | AA | AA | | Y | |
| Comp. Ex. 3 | A | A | AA | AA | AA | | | Y |
| Comp. Ex. 4 | B | B | B | AA | AA | Y | | |
| Ex. 7 | AA | AA | A | AA | AA | | Y | |
| Ex. 8 | AA | AA | AA | AA | AA | | Y | |
| Ex. 9 | AA | AA | AA | AA | AA | | Y | |
| Ex. 10 | AA | AA | AA | A | AA | | Y | |
| Comp. Ex. 5 | B | AA | AA | B | AA | Y | | |

[Table 5]

| | Material formulation | | | | | | | | | | | | |
| | Transp | arent resin layer | | Cut level difference before forming surface protective layer | Surface protective layer | | | | | | | | |
| | | Additive | | | | Acrylate resin 1 | | | | Acrylate resin 2 | | | |
| | | UV absorber | Photostabilizer | | | | | Repeating structure | | | | Repeating structure | |
| | Thickness (μm) | Added amount (mass parts) | Added amount (mass parts) | Rdc (μm) | Thickness (μm) | Added amount (mass parts) | Number of functional groups | Structure | Number of repeat units | Added amount (mass parts) | Number of functional groups | Structure | Number of repeat units |
|---|---|---|---|---|---|---|---|---|---|---|---|---|---|
| Ex. 11 | 70 | 0.5 | 0.5 | 0.5 | 5 | 100 | 3 | $C_2H_4O$ | 15 | - | - | - | - |
| Comp. Ex. 6 | 70 | 0.5 | 0.5 | 2.6 | 5 | 100 | 3 | $C_2H_4O$ | 15 | - | - | - | - |
| Comp. Ex. 7 | 70 | 0.5 | 0.5 | 3.2 | 5 | 100 | 3 | $C_2H_4O$ | 15 | - | - | - | - |
| Comp. Ex. 8 | 70 | 0.5 | 0.5 | 0.5 | 5 | 100 | 3 | $C_2H_4O$ | 20 | - | - | - | - |
| Ex. 12 | 70 | 0.5 | 0.5 | 0.5 | 5 | 100 | 3 | $C_2H_4O$ | 9 | - | - | - | - |
| Ex. 13 | 70 | 0.5 | 0.5 | 0.5 | 5 | 100 | 3 | $C_2H_4O$ | 6 | - | - | - | - |
| Ex. 14 | 70 | 0.5 | 0.5 | 0.5 | 5 | 100 | 3 | $C_2H_4O$ | 3 | - | - | - | - |
| Comp. Ex. 9 | 70 | 0.5 | 0.5 | 0.5 | 1 | 100 | 3 | $C_2H_4O$ | 15 | - | - | - | - |
| Ex. 15 | 70 | 0.5 | 0.5 | 0.5 | 2 | 100 | 3 | $C_2H_4O$ | 15 | - | - | - | - |
| Ex. 16 | 70 | 0.5 | 0.5 | 0.5 | 10 | 100 | 3 | $C_2H_4O$ | 15 | - | - | - | - |
| Ex. 17 | 70 | 0.5 | 0.5 | 0.5 | 18 | 100 | 3 | $C_2H_4O$ | 15 | - | - | - | - |
| Comp. Ex. 10 | 70 | 0.5 | 0.5 | 0.5 | 20 | 100 | 3 | $C_2H_4O$ | 15 | - | - | - | - |
| Ex. 18 | 70 | 0.5 | 0.5 | 0.5 | 5 | 100 | 3 | $C_2H_4O$ | 15 | - | - | - | - |
| Ex. 19 | 70 | 0.5 | 0.5 | 0.5 | 5 | 100 | 3 | $C_2H_4O$ | 15 | - | - | - | - |

EP 4 656 373 A1

(continued)

| | Transp | arent resin layer | | Cut level difference before forming surface protective layer | Surface protective layer | | | | | | | | |
|---|---|---|---|---|---|---|---|---|---|---|---|---|---|
| | | Additive | | | | Acrylate resin 1 | | | | Acrylate resin 2 | | | |
| | | UV absorber | Photostabilizer | | Thickness (µm) | Added amount (mass parts) | Number of functional groups | Repeating structure | | Added amount (mass parts) | Number of functional groups | Repeating structure | |
| | Thickness (µm) | Added amount (mass parts) | Added amount (mass parts) | Rdc (µm) | | | | Structure | Number of repeat units | | | Structure | Number of repeat units |
| Ex. 20 | 70 | 0.5 | 0.5 | 0.5 | 5 | 100 | 3 | $C_2H_4O$ | 15 | - | - | - | - |
| Ex. 21 | 70 | 0.5 | 0.5 | 0.5 | 5 | 100 | 3 | $C_2H_4O$ | 15 | - | - | - | - |
| Ex. 22 | 70 | 0.5 | 0.5 | 0.5 | 5 | 100 | 3 | $C_2H_4O$ | 15 | - | - | - | - |

Material formulation

EP 4 656 373 A1

[Table 6]

| | Material formulation | | | | | First irradiation step performed? | Second irradiation step |
|---|---|---|---|---|---|---|---|
| | Surface protective layer | | | | | | |
| | Additive | | | | | | |
| | Particles | | Photopolymerization initiator | Photostabilizer | | | |
| | Particle size (μm) | Added amount (mass parts) | Added amount (mass parts) | Added amount (mass parts) | | | |
| Ex. 11 | - | 0 | 3 | 0 | | Yes | UV light |
| Comp. Ex. 6 | - | 0 | 3 | 0 | | Yes | UV light |
| Comp. Ex. 7 | - | 0 | 3 | 0 | | Yes | UV light |
| Comp. Ex. 8 | - | 0 | 3 | 0 | | Yes | UV light |
| Ex. 12 | - | 0 | 3 | 0 | | Yes | UV light |
| Ex. 13 | - | 0 | 3 | 0 | | Yes | UV light |
| Ex. 14 | - | 0 | 3 | 0 | | Yes | UV light |
| Comp. Ex. 9 | 5 | 5 | 3 | 0 | | Yes | UV light |
| Ex. 15 | 5 | 5 | 3 | 0 | | Yes | UV light |
| Ex. 16 | 5 | 5 | 3 | 0 | | Yes | UV light |
| Ex. 17 | 5 | 5 | 3 | 0 | | Yes | UV light |
| Comp. Ex. 10 | 5 | 5 | 3 | 0 | | Yes | UV light |
| Ex. 18 | 2 | 5 | 3 | 0 | | Yes | UV light |
| Ex. 19 | 3 | 5 | 3 | 0 | | Yes | UV light |
| Ex. 20 | 8 | 5 | 3 | 0 | | Yes | UV light |
| Ex. 21 | 11 | 5 | 3 | 0 | | Yes | UV light |
| Ex. 22 | 14 | 5 | 3 | 0 | | Yes | UV light |

[Table 7]

| | Evaluation for physical properties | | | | | | |
|---|---|---|---|---|---|---|---|
| | Surface configuration | Total thickness (μm) | Surface condition | Cut level difference | | 60° gloss | Ratio $I_{1095}/I_{1725}$ |
| | | | | Rdc (μm) | Rdc/t | | |
| Ex. 11 | Ridged | 130 | Fair | 2.20 | 0.44 | 2.2 | 1.16 |
| Comp. Ex. 6 | Ridged | 130 | Fair | 2.45 | 0.49 | 2.2 | 1.16 |
| Comp. Ex. 7 | Ridged | 130 | Fair | 2.80 | 0.56 | 2.2 | 1.16 |
| Comp. Ex. 8 | Ridged | 130 | Fair | 2.35 | 0.47 | 1.9 | 1.36 |
| Ex. 12 | Ridged | 130 | Fair | 2.10 | 0.42 | 3.5 | 0.92 |
| Ex. 13 | Ridged | 130 | Fair | 2.00 | 0.40 | 6.8 | 0.81 |
| Ex. 14 | Ridged | 130 | Fair | 1.85 | 0.37 | 9.4 | 0.69 |
| Comp. Ex. 9 | Ridged | 126 | Fair | 0.14 | 0.14 | 5.9 | 1.26 |
| Ex. 15 | Ridged | 127 | Good | 0.38 | 0.19 | 4.9 | 1.26 |

33

(continued)

| | Evaluation for physical properties | | | | | | |
| | Surface configuration | Total thickness (μm) | Surface condition | Cut level difference | | 60° gloss | Ratio $I_{1095}/I_{1725}$ |
| | | | | Rdc (μm) | Rdc/t | | |
| Ex. 16 | Ridged | 135 | Good | 2.40 | 0.24 | 0.8 | 1.26 |
| Ex. 17 | Ridged | 143 | Good | 5.86 | 0.33 | 0.7 | 1.26 |
| Comp. Ex. 10 | Ridged | 145 | Good | 7.20 | 0.36 | 0.6 | 1.26 |
| Ex. 18 | Ridged | 130 | Fair | 1.10 | 0.22 | 1.6 | 1.21 |
| Ex. 19 | Ridged | 130 | Good | 0.95 | 0.19 | 1.5 | 1.21 |
| Ex. 20 | Ridged | 130 | Good | 0.85 | 0.17 | 1.4 | 1.31 |
| Ex. 21 | Ridged | 130 | Good | 0.75 | 0.16 | 1.2 | 1.31 |
| Ex. 22 | Ridged | 130 | Good | 0.70 | 0.15 | 1.1 | 1.31 |

[Table 8]

| | Evaluation for physical properties | | | | | Skin feel | | |
| | Fingerprint resistance | Contamination resistance | Scratch resistance | Formability | Weather resistance | A | B | C |
| | | Contamination A test | Steel | Bending formability | Super UV | Smooth | Moist | Rough |
| Ex. 11 | AA | AA | AA | AA | AA | | Y | |
| Comp. Ex. 6 | AA | AA | AA | AA | AA | | | Y |
| Comp. Ex. 7 | AA | AA | AA | AA | AA | | | Y |
| Comp. Ex. 8 | AA | AA | A | AA | AA | | | Y |
| Ex. 12 | AA | AA | AA | AA | AA | | Y | |
| Ex. 13 | AA | AA | AA | AA | AA | | Y | |
| Ex. 14 | AA | AA | AA | A | AA | | Y | |
| Comp. Ex. 9 | AA | AA | A | AA | AA | Y | | |
| Ex. 15 | AA | AA | AA | AA | AA | | Y | |
| Ex. 16 | AA | AA | AA | AA | AA | | Y | |
| Ex. 17 | AA | AA | AA | A | AA | | Y | |
| Comp. Ex. 10 | AA | AA | AA | A | AA | | | Y |
| Ex. 18 | AA | AA | AA | AA | AA | | Y | |
| Ex. 19 | AA | AA | AA | AA | AA | | Y | |
| Ex. 20 | AA | AA | AA | AA | AA | | Y | |
| Ex. 21 | A | A | A | A | AA | | Y | |
| Ex. 22 | A | A | A | A | AA | | Y | |

[Table 9]

| | Material formulation | | | | | | | | | | | | | |
| | Trans | parent resin layer | | Cut level difference before forming surface protective layer | Surface protective layer | | | | | | | | | |
| | | Additive | | | | Acrylate resin 1 | | | | Acrylate resin 2 | | | | |
| | Thickness ($\mu$m) | UV absorber | Photostabilizer | | Thickness ($\mu$m) | Added amount (mass parts) | Number of functional groups | Repeating structure | | Added amount (mass parts) | Number of functional groups | Repeating structure | | |
| | | Added amount (mass parts) | Added amount (mass parts) | Rdc ($\mu$m) | | | | Structure | Number of repeat units | | | Structure | Number of repeat units |
| Ex. 23 | 70 | 0.5 | 0.5 | 0.5 | 5 | 100 | 3 | $C_2H_4O$ | 15 | - | - | - | - |
| Ex. 24 | 70 | 0.5 | 0.5 | 0.5 | 5 | 100 | 3 | $C_2H_4O$ | 15 | - | - | - | - |
| Ex. 25 | 70 | 0.5 | 0.5 | 0.5 | 5 | 100 | 3 | $C_2H_4O$ | 15 | - | - | - | - |
| Ex. 26 | 70 | 0.5 | 0.5 | 0.5 | 5 | 100 | 3 | $C_2H_4O$ | 15 | - | - | - | - |
| Ex. 27 | 70 | 0.5 | 0.5 | 0.5 | 5 | 100 | 4 | $C_2H_4O$ | 20 | - | - | - | - |
| Ex. 28 | 70 | 0.5 | 0.5 | 0.5 | 5 | 100 | 4 | $C_2H_4O$ | 35 | - | - | - | - |
| Comp. Ex. 11 | 70 | 0.5 | 0.5 | 0.5 | 5 | 100 | 2 | $C_2H_4O$ | 9 | - | - | - | - |
| Comp. Ex. 12 | 70 | 0.5 | 0.5 | 0.5 | 5 | 100 | 6 | $C_2H_4O$ | 12 | - | - | - | - |
| Comp. Ex. 13 | 70 | 0.5 | 0.5 | 0.5 | 5 | 100 | 4 | None | - | - | - | - | - |
| Ex. 29 | 70 | 0.5 | 0.5 | 0.5 | 5 | 100 | 3 | $C_3H_6O$ | 6 | - | - | - | - |
| Ex. 30 | 70 | 0.5 | 0.5 | 0.5 | 5 | 100 | 3 | $C_6H_{10}O_2$ | 3 | - | - | - | - |
| Ex. 31 | 70 | 0.5 | 0.5 | 0.5 | 5 | 100 | 3 | $C_2H_4O$ | 15 | - | - | - | - |
| Ex. 32 | 70 | 0.5 | 0.5 | 0.5 | 5 | 100 | 3 | $C_2H_4O$ | 15 | - | - | - | - |
| Ex. 33 | 70 | 0.5 | 0.5 | 0.5 | 5 | 100 | 3 | $C_2H_4O$ | 15 | - | - | - | - |
| Ex. 34 | 70 | 0.5 | 0.5 | 0.5 | 5 | 100 | 3 | $C_2H_4O$ | 15 | - | - | - | - |

[Table 10]

| | | Material formulation | | | | First irradiation step performed? | Second irradiation step |
| | | Surface protective layer | | | | | |
| | | Additive | | | | | |
| | | Particles | | Photopolymerization initiator | Photostabilizer | | |
| | | Particle size (μm) | Added amount (mass parts) | Added amount (mass parts) | Added amount (mass parts) | | |
| Ex. 23 | | 5 | 2 | 3 | 0 | Yes | UV light |
| Ex. 24 | | 5 | 3 | 3 | 0 | Yes | UV light |
| Ex. 25 | | 5 | 11 | 3 | 0 | Yes | UV light |
| Ex. 26 | | 5 | 12 | 3 | 0 | Yes | UV light |
| Ex. 27 | | 5 | 5 | 3 | 0 | Yes | UV light |
| Ex. 28 | | 5 | 5 | 3 | 0 | Yes | UV light |
| Comp. Ex. 11 | | 5 | 5 | 3 | 0 | Yes | UV light |
| Comp. Ex. 12 | | 5 | 5 | 3 | 0 | Yes | UV light |
| Comp. Ex. 13 | | 5 | 5 | 3 | 0 | Yes | UV light |
| Ex. 29 | | 5 | 5 | 3 | 0 | Yes | UV light |
| Ex. 30 | | 5 | 5 | 3 | 0 | Yes | UV light |
| Ex. 31 | | 5 | 5 | 0 | 0 | Yes | Ionizing radiation |
| Ex. 32 | | 5 | 5 | 3 | 1 | Yes | UV light |
| Ex. 33 | | 5 | 5 | 3 | 3 | Yes | UV light |
| Ex. 34 | | 5 | 5 | 3 | 5 | Yes | UV light |

[Table 11]

| | | Evaluation for physical properties | | | | | | |
| | | Surface configuration | Total thickness (μm) | Surface condition | Cut level difference | | 60° gloss | Ratio $I_{1095}/I_{1725}$ |
| | | | | | Rdc (μm) | Rdc/t | | |
| Ex. 23 | | Ridged | 130 | Good | 1.80 | 0.36 | 2.1 | 1.21 |
| Ex. 24 | | Ridged | 130 | Good | 1.54 | 0.31 | 1.9 | 1.21 |
| Ex. 25 | | Ridged | 130 | Good | 1.03 | 0.21 | 1.4 | 1.31 |
| Ex. 26 | | Ridged | 130 | Good | 0.94 | 0.19 | 1.4 | 1.31 |
| Ex. 27 | | Ridged | 130 | Good | 0.94 | 0.19 | 5.5 | 1.48 |
| Ex. 28 | | Ridged | 130 | Good | 1.63 | 0.33 | 1.4 | 2.14 |
| Comp. Ex. 11 | | Ridged | 130 | Good | 2.25 | 0.45 | 3.0 | 0.99 |
| Comp. Ex. 12 | | Ridged | 130 | Good | 0.65 | 0.13 | 12 | 1.13 |
| Comp. Ex. 13 | | Ridged | 130 | Good | 0.65 | 0.13 | 18 | 0.60 |
| Ex. 29 | | Ridged | 130 | Good | 1.20 | 0.24 | 1.5 | 0.86 |
| Ex. 30 | | Ridged | 130 | Good | 1.20 | 0.24 | 1.5 | 0.73 |

(continued)

| | Evaluation for physical properties | | | | | | |
| | Surface configuration | Total thickness (μm) | Surface condition | Cut level difference | | 60° gloss | Ratio $I_{1095}/I_{1725}$ |
| | | | | Rdc (μm) | Rdc/t | | |
| Ex. 31 | Ridged | 130 | Good | 1.15 | 0.23 | 1.5 | 1.26 |
| Ex. 32 | Ridged | 130 | Good | 1.08 | 0.22 | 2.0 | 1.26 |
| Ex. 33 | Ridged | 130 | Good | 0.94 | 0.19 | 2.5 | 1.26 |
| Ex. 34 | Ridged | 130 | Good | 0.80 | 0.16 | 5.0 | 1.26 |

[Table 12]

| | Evaluation for physical properties | | | | | Skin feel | | |
| | Fingerprint resistance | Contamination resistance | Scratch resistance | Formability | Weather resistance | A | B | C |
| | | Contamination A test | Steel | Bending formability | Super UV | Smooth | Moist | Rough |
| Ex. 23 | AA | AA | AA | AA | AA | | Y | |
| Ex. 24 | AA | AA | AA | AA | AA | | Y | |
| Ex. 25 | A | A | AA | AA | AA | | Y | |
| Ex. 26 | A | A | AA | AA | AA | | Y | |
| Ex. 27 | AA | AA | AA | A | AA | | Y | |
| Ex. 28 | AA | AA | A | AA | AA | | Y | |
| Comp. Ex. 11 | AA | AA | B | AA | AA | | | Y |
| Comp. Ex. 12 | B | AA | AA | B | AA | Y | | |
| Comp. Ex. 13 | B | AA | AA | B | AA | Y | | |
| Ex. 29 | AA | AA | AA | AA | AA | | Y | |
| Ex. 30 | AA | AA | AA | AA | AA | | Y | |
| Ex. 31 | AA | AA | AA | AA | AA | | Y | |
| Ex. 32 | AA | AA | AA | AA | AA | | Y | |
| Ex. 33 | AA | AA | AA | AA | AA | | Y | |
| Ex. 34 | AA | AA | AA | AA | AA | | Y | |

As shown in the tables, the decorative sheets of Examples 1 to 34 were judged by the evaluators to have a moist feel. The decorative sheets of Examples 1 to 34 had low gloss and had excellent fingerprint resistance, contamination resistance, scratch resistance, formability, and weather resistance. In particular, the decorative sheets of Examples 4 to 34 including the transparent resin layer could further improve scratch resistance and weather resistance.

As shown in the tables, Comparative Examples 1, 2, 4, 5, 9, 12 and 13 were not judged by the evaluators to have a moist feel, but gave them a smooth feel. Comparative Examples 3, 6, 7, 8, 10 and 11 were not judged by the evaluators to have a moist feel, but gave them a rough feel.

[Reference Signs List]

1       Decorative sheet
2       Primary film layer
3       Pattern layer
4       Transparent resin layer
4a      Embossed pattern
4b      Adhesive resin layer
5       Surface protective layer
5A      Core portion
5B      Ridge portion
6       Primer layer
11      Decorative material
B       Substrate

**Claims**

1.  A decorative sheet comprising a primary film layer and a surface protective layer provided to one side of the primary film layer, wherein

    the surface protective layer has a surface provided with an uneven structure including a plurality of ridge portions each protruding in a ridge-like shape;
    in the uneven structure of the surface protective layer, a ratio Rdc/t between a cut level difference Rdc and a thickness t of the surface protective layer is 0.15 or more and 0.44 or less;
    the thickness t of the surface protective layer is 2 $\mu$m or more and 18 $\mu$m or less; and
    an absorption spectrum obtained from Fourier infrared spectrometry of the surface protective layer has a ratio $I_{1095}/I_{1725}$ of 0.65 or more, between a maximum value $I_{1095}$ in a wavenumber range of 1085 to 1105 cm$^{-1}$ and a maximum value $I_{1725}$ in a wavenumber range of 1715 to 1735 cm$^{-1}$.

2.  The decorative sheet according to claim 1, wherein the surface protective layer has a gloss of less than 10.0.

3.  The decorative sheet according to claim 1 or 2, wherein the ratio Rdc/t is 0.15 or more and 0.31 or less.

4.  The decorative sheet according to any one of claims 1 to 3, wherein the ratio Rdc/t is 0.15 or more and 0.25 or less.

5.  The decorative sheet according to any one of claims 1 to 4, wherein the ratio $I_{1095}/I_{1725}$ is 3.5 or less.

6.  The decorative sheet according to any one of claims 1 to 5, wherein the surface protective layer contains a cured product of a resin and particles; the particles have an average particle size of 3 $\mu$m or more and 11 $\mu$m or less; and the particles are contained in the surface protective layer in an amount of 3 parts by mass or more and 11 parts by mass or less relative to 100 parts by mass of the resin.

7.  The decorative sheet according to claim 6, wherein the resin comprises an ionizing radiation curable resin.

8.  The decorative sheet according to claim 6 or 7, wherein the resin comprises an acrylate.

9.  The decorative sheet according to any one of claims 6 to 8, wherein the resin comprises a trifunctional acrylate containing a repeating structure; and the number of repeat units of the repeating structure is 3 or more and 20 or less.

10. The decorative sheet according to any one of claims 6 to 8, wherein the resin comprises a tetrafunctional acrylate containing a repeating structure; and the number of repeat units of the repeating structure is 20 or more and 35 or less.

11. The decorative sheet according to any one of claims 1 to 10, further comprising a pattern layer between the primary film layer and the surface protective layer.

12. A decorative material comprising

    the decorative sheet according to any one of claims 1 to 11; and
    a substrate to which the decorative sheet is attached.

# FIG.1

# FIG.2

# FIG.3

# FIG.4

SCANNING MODE: XYZ HIGH SPEED
IMAGE SIZE [PIXEL]: 1024 × 1024
IMAGE SIZE [μm]: 1281 × 1267
OBJECTIVE LENS: MPLFLN10
ZOOM: 1X

200μm

## INTERNATIONAL SEARCH REPORT

| International application No. |
|---|
| **PCT/JP2023/045696** |

**A. CLASSIFICATION OF SUBJECT MATTER**

***B32B 3/30***(2006.01)i; ***B32B 7/023***(2019.01)i; ***B32B 27/00***(2006.01)i; ***B32B 27/16***(2006.01)i
FI:  B32B3/30; B32B7/023; B32B27/00 E; B32B27/16 101

According to International Patent Classification (IPC) or to both national classification and IPC

**B. FIELDS SEARCHED**

Minimum documentation searched (classification system followed by classification symbols)

B32B1/00-43/00; C08J5/00-5/22; E04F15/00-15/22

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-144437 A (TOPPAN PRINTING CO., LTD.) 20 September 2018 (2018-09-20) entire text | 1-12 |
| A | WO 2017/033972 A1 (TOPPAN PRINTING CO., LTD.) 02 March 2017 (2017-03-02) entire text | 1-12 |
| A | JP 2020-75420 A (TOPPAN PRINTING CO., LTD.) 21 May 2020 (2020-05-21) entire text | 1-12 |
| A | WO 2022/239270 A1 (TOPPAN PRINTING CO., LTD.) 17 November 2022 (2022-11-17) entire text | 1-12 |
| A | JP 2021-137990 A (TOPPAN PRINTING CO., LTD.) 16 September 2021 (2021-09-16) entire text | 1-12 |
| A | JP 2007-185606 A (NIPPON PAINT CO., LTD.) 26 July 2007 (2007-07-26) entire text | 1-12 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 February 2024** | **05 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2023/045696**

| Patent document cited in search report | | | Publication date (day/month/year) | Patent family member(s) | | | Publication date (day/month/year) |
|---|---|---|---|---|---|---|---|
| JP | 2018-144437 | A | 20 September 2018 | (Family: none) | | | |
| WO | 2017/033972 | A1 | 02 March 2017 | US | 2018/0264791 | A1 | |
| | | | | EP | 3342589 | A1 | |
| | | | | AU | 2016311950 | A | |
| | | | | CN | 107921765 | A | |
| | | | | KR | 10-2018-0042265 | A | |
| | | | | TW | 201713506 | A | |
| JP | 2020-75420 | A | 21 May 2020 | (Family: none) | | | |
| WO | 2022/239270 | A1 | 17 November 2022 | US | 2023/0146524 | A1 | |
| | | | | EP | 4116095 | A1 | |
| | | | | CN | 115623867 | A | |
| JP | 2021-137990 | A | 16 September 2021 | US | 2023/0041625 | A1 | |
| | | | | WO | 2021/149480 | A1 | |
| | | | | EP | 4094934 | A1 | |
| | | | | KR | 10-2022-0113746 | A | |
| | | | | CN | 114945463 | A | |
| | | | | AU | 2021210701 | A | |
| JP | 2007-185606 | A | 26 July 2007 | (Family: none) | | | |

Form PCT/ISA/210 (patent family annex) (July 2022)

**REFERENCES CITED IN THE DESCRIPTION**

**Patent documents cited in the description**

- JP 3271022 B
- JP 2019119138 A
- WO 2021201105 A
- JP 2022008024 A
- WO 2022054644 A
- WO 2022054645 A
- WO 2022054646 A